(19) **Europäisches Patentamt**
**European Patent Office**
**Office européen des brevets**

(11) **EP 2 167 916 B1**

(12) **EUROPEAN PATENT SPECIFICATION**

(45) Date of publication and mention
of the grant of the patent:
**04.05.2011 Bulletin 2011/18**

(51) Int Cl.:
*G01C 13/00* (2006.01)     *G05D 1/08* (2006.01)
*G01S 13/95* (2006.01)

(21) Application number: **08776423.9**

(86) International application number:
**PCT/IB2008/052360**

(22) Date of filing: **16.06.2008**

(87) International publication number:
**WO 2008/152613 (18.12.2008 Gazette 2008/51)**

(54) **DEVICE AND METHOD FOR OPERATOR GUIDANCE OF A SHIP**

VORRICHTUNG UND VERFAHREN ZUR BEDIENERANWEISUNG BEI EINEM SCHIFF

DISPOSITIF ET PROCÉDÉ DE GUIDAGE POUR L'HOMME DE QUART D'UN NAVIRE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **14.06.2007 PCT/IT2007/000424**

(43) Date of publication of application:
**31.03.2010 Bulletin 2010/13**

(73) Proprietor: **FINCANTIERI CANTIERI NAVALI ITALIANI S.p.A.**
**34121 Trieste (IT)**

(72) Inventor: **BACICCHI, Giorgio**
**I-34151 Trieste (IT)**

(74) Representative: **Crippa, Paolo Ernesto et al**
**Jacobacci & Partners S.p.A.**
**Via Senato, 8**
**20121 Milano (IT)**

(56) References cited:
**JP-A- 2001 141 456     US-B1- 6 263 297**

- **"Improving schedule integrity Shipboard Routing Assistance" INTERNET CITATION, [Online] 1 August 2004 (2004-08-01), pages 1-5, XP007907469 Retrieved from the Internet: URL: http://www.amarcon.com/consultancy/GL_ Brochure.pdf> [retrieved on 2009-03-02]**
- **"DAILY SHIPPING NEWSLETTER 2003 189" INTERNET CITATION, [Online] 15 October 2003 (2003-10-15), pages 1-15, XP007907468 Retrieved from the Internet: URL:http://www.amarcon.com/ news/189-15-10- 2003.pdf> [retrieved on 2009-03-02]**
- **JOURNÉE J M J: "Review of the 1985 Full-Scale Calm Water Performance Tests Onboard m.v. Mighty Servant 3" INTERNET CITATION, 1 August 2003 (2003-08-01), pages 1-112, XP007907467**

## Description

The subjet of the present invention is an apparatus (defined by claim1) and a method (defined by claim 17) for operator guidance of a ship.

in particular, such apparatus (or equipment or device) allows monitoring, predicting (or simulating) the structural dynamic behaviour of the ship based on the sea conditions actually encountered while in navigation and based on the predictable sea conditions on the medium/long term.

BACKGROUND OF THE Invention:

"Improving schedule integrity Shipboard Routing Assistance" INTERNET CITATION http://www.amarcon.com.news/consultancy/GL_Brochure.pdf XP007907469.

"DAILY SHIPPING NEWSLETTER 2003 189" http://www.amarcon.com.news/189-15-10-2003.pdf XP007907468.

JOURNEE J M J:"Review of the 1985 Full-Scale Calm Water Performance Test Onboard m.v. Mighty Servant 3" XP007907467.

These know arrangements show operator guidance systems employing wave radar for predisctions of ships behaviour based on the assessment of the motion of the rigid ship hull.

US-B1-6263297 shows an analysis of slamming (whipping) and the combined effect of high frequency whipping with low frequency wave loading on the ship structure.

Wave motion is an intrinsically statistical phenomenon, meaning that based on previous observations it is not to exactly determine which the next value of the wave elevation in a given position will be.

As a consequence, all the quantities related to the wavy sea, and in particular ship motions and structural stresses in rough sea, may be studied only from a statistical point of view. Therefore, it is not possible to say, for example, which the effective value of the structural stress will be at a given moment at a predetermined condition of the sea, but only of the likelihood that such value falls within a given range.

The wavy sea may in general be considered as the overlapping of a great number of single waves (called regular waves) not correlated to each other, in time and space, each in general characterised by certain amplitude, a certain direction of origin and a certain oscillation period.

The law regulating the contribution of each component to the resulting wave as a function of the period and the direction of origin is the so-called energy spectrum of the sea.

Each sea condition, within the temporal terms for which it is possible to presume that the sea conditions remain unchanged, that is, typically between 3 and 6 hours, it is completely described by its corresponding energy spectrum.

The most significant parameters of the energy spectrum are essentially three, that is, the significant wave height, the wave peak period and the wave peak direction.

The significant height measures the energy contents of the sea and correlates well with the height between wave peak and trough visually assessed by an observer. In mathematical terms, it is defined as the mean of 1/3 of the greatest heights observed in a given time range in a given sea condition.

The peak period, on the other hand, measures the sea contents in frequency and represents the period of the component with the greatest energy, that is, of the component that contributes more to the wave elevation.

The peak direction, on the other hand, represents the direction of the spectrum component with the greatest energy.

Several devices for measuring the sea spectrum exist.

Among the most advanced are the devices based on the use of a radar mounted on board of the ship and capable, through the reflection of the radar echoes by the sea waves, of reconstructing the current directional spectrum of the sea in the proximity of the ship. Such devices are known in the field as wave radars.

The main advantage of the wave radar compared to other measurement systems that may be installed onboard lies in the possibility of providing not just the height of the waves encountered but also their period.

It should be noted that for the definition of a sea condition, reference is made to two different pairs of the above three quantities (significant height; peak period; peak direction), respectively called primary quantities and secondary quantities.

This distinction results from the fact that most sea conditions actually are the result of the overlapping of two distinct sea conditions, wherein the relative contribution (hence the distinction between primary and secondary component) varies according to the situations: the so-called wind sea or simply sea, associated to the current wind conditions on the area concerned, and the so-called swell consisting of the residual wave of a previous sea storm coming even from large distances from the area concerned.

This distinction between primary quantities and secondary quantities is reflected both by the wave radar processing and in most weather reports.

At presently there exist several theoretical models that represent the typical pattern of the energy spectrum of a given condition of the sea, according to the geographical zone concerned. Of these, the most versatile is the so-called JONSWAP spectrum (an acronym of Joint Organisation North Sea Wave Project) which describes any sea condition based on three parameters: the two already mentioned parameters of significant height and peak period and the so-called elevation factor.

The elevation factor allows modelling both closed sea conditions (such as the Mediterranean Sea or the North Sea) and open sea conditions (such as the Atlantic Ocean).

A consequence of the fact that said sea condition may be considered as resulting from the combination of a large number of not deterministically correlated events is that the statistical basis to study the dynamic behaviour of the ship is represented by the known Gauss law, also called the law of large numbers.

The fundamental parameter to statistically describe any quantity associated to the wave motion therefore is the so-called rms or RMS value, or average quadratic deviation of the quantity itself. However, such quantity is not directly interpretable in concrete physical terms; the closest concept to a deterministic physical value is the so-called most probable maximum value that expresses the highest value a given quantity can possibly take in a given lapse of time. In any case, the maximum value is directly proportional to the above rms value, the proportionality constant being related to the waiting time and to the characteristic period of the quantity being examined (statistically known as zero-crossing period, that is, average zero crossing period).

The wave agitation at a ship gives rise to motions that may even be violent according to the sea condition and the operating conditions.

Several structural ship monitoring systems currently exist on the market.

Some known systems, among which we may mention the *HULLMOS* system produced and sold on the market by *Rouvari,* consist of a certain number of strainmeters, suitably positioned on the ship so as to detect the stresses in the critical points of the structure.

As regards the operating and weather-sea conditions such systems usually acquire the data from the GPS and from a wave measuring sensor, or as an alternative from a wave radar.

Operatively, the current structural monitoring systems only provide information on what is actually happening on the ship.

While such systems provide real time information on the structural behaviour of the ship to the operators, however they do not allow forecasts on the ship behaviour upon the variation of sea conditions, of the route and/or of the speed of the ship itself.

By wave radar it is meant a system for measuring the sea condition based on the use of a radar mounted on board of the ship and capable, through the reflection of the radar echoes by the sea waves, of reconstructing the current directional spectrum of the sea in the proximity of the ship. The main advantage of the wave radar compared to other measurement systems that may be installed onboard lies in the possibility of providing not just the height of the waves encountered but also their period. Three main manufacturers of wave radars currently exist on the market: The company *MIROS* sited in Norway which produces the system *WAVEX, Ocean Waves* sited in Germany which produces the system *WAMOS, SeaDarq* sited in the Netherlands. The basic technology of the three systems is quite similar.

Operator Guidance Systems are also known. The same *MIROS* has developed in integration of its system *WAVEX,* the system *'AOG' ('Active Operator Guidance System')* capable of providing forecasts on the short term behaviour of the ship based on the information acquired by the *'wave radar'.*

The Norwegian company *AMARCON* produces and sells the system *'Octopus'.* In particular, the system *'Octopus-DSS' ( 'DSS'* stands for *'Decision Support System')* is software that can interface with the main *wave radar'* systems to provide short term forecasts on the ship behaviour based on the rigid motions of the hull. The software *'Octopus-DSS'* is the core of the operator guidance system *SRA ('Shipboard Routing Assistance')* licensed by *Germanischer Lloyd.* The software *'Octopus-DSS'* uses a quite sophisticated mathematical model based on the computation code *WASIM,* to forecast the ship movements and the overall loads induced by the wave. To this end, WASIM requires interfacing with the *loading system,* or arrangement of the onboard load to access the information required on the hull geometry and on the actual loading condition of the ship.

While this system '*Octopus-DSS'* is very satisfactory under many points of view, it only assesses the motions of a rigid body of the ship. Moreover, Octopus uses response operators (that is, the ship response to a single component of the wavy sea) and calculates on-line the actual response to the sea condition encountered by the ship combining the response operator with the sea spectrum measured by the wave radar, giving a complex calculation highly subject to the measurement errors of the wave radar. While the Octopus approach is basically accurate, it is not very robust and is subject to possible irregularities in the measurement system.

SUMMARY OF THE INVENTION

The invention as defined by claims 1 and 17, aims at realising a system and method for forecasting the dynamic behaviour of the ship based on the onboard measurement of the actual sea conditions encountered while in navigation.

It is important to note that such determination also requires the prediction of the impact pressures on the bow, which is only possible thanks to an accurate knowledge of the vibratory behaviour of the entire ship structure and of a hydro-elastic model of the same validated with experimental tests. Moreover, the proposed solution allows extending the functionalities in order to incorporate the passengers' comfort forecast.

The ship motions are usually studied assuming a rigid body, that is, considering the ship as an non-deformable structure. With such assumption, six quantities are sufficient to fully describe the dynamic behaviour of the ship: they are the so-called barycentric motions, that is, the ship translation and rotation motions relative to the centre of the weights.

In general, as regards the safety and comfort of passengers, such primary quantities are not immediately interesting but rather the derivative quantities, and in particular the vertical and side accelerations at the living or hotel zones of the ship.

The hypothesis of rigid body allows assessing also the so-called overall wave dynamic loads, that is, the stresses the ship structure is subject to following the direct action of the wave excitation and the indirect action due to the consequent ship motions.

As regards the ship sizing and thus its structural integrity, two quantities are particularly interesting: the maximum shearing value, that is, the reciprocal vertical sliding force (VSF) between two immediately adjacent cross sections of the ship, and the bending moment (VBM), that is, the lever action the above sliding forces exert relative to a given cross section.

Typically, the shearing force is maximum at ¾ of the ship length (L) from ahead and the bending moment is maximum at the centre line, that is, at the centre of the ship.

From the accurate studies conducted, it has been shown that there is a contribution to the overall dynamic loads that cannot be ignored, on the contrary it may have a dominant role, and the interpretation whereof requires setting aside the hypothesis of rigid body and considering the ship as an elastic structure.

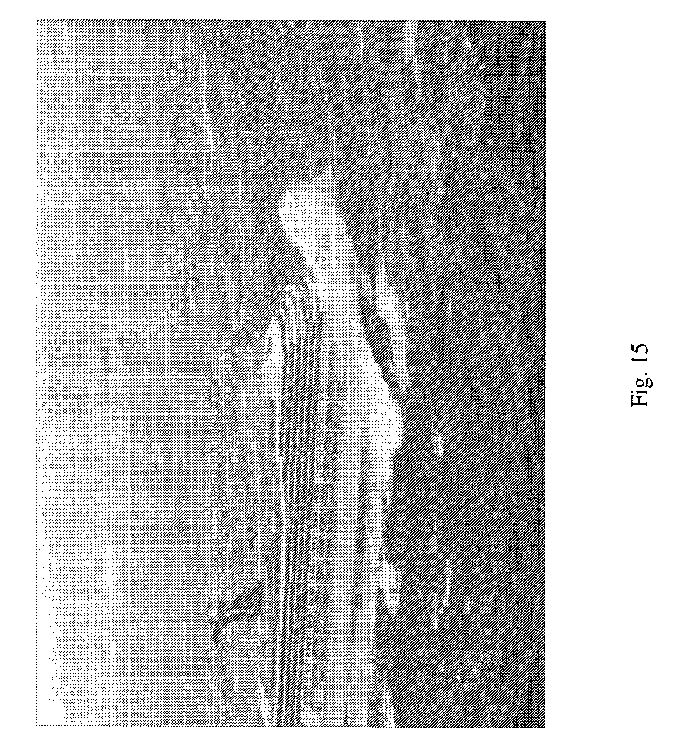

In order to determine unfavourable conditions, which are typically related to the so-called steep waves (that is, characterised by high ratio values between wave height and length) coming from the bow and relatively high ship speeds, the ship bow may be concerned by the so-called slamming phenomenon (see Figure 15). In the practice, these are wave impacts on the ship planking which may be particularly strong in the case of cruisers characterised by wide flares of the hull in the bow zone.

Such impact can make the entire ship structure vibrate, as it happens in the cased of a metal beam hit by a hammer. These vibrations or vibration motions excited by a sudden action or pulse, constitute the so-called whipping phenomenon. Such vibrations take place at different frequencies according to the structural (stiffness) and inertial (weight distribution) characteristics of the ship. The whipping vibrations may significantly contribute to the maximum values of the above two fundamental quantities for the ship sizing: vertical shear at ¾ and bending moment at the centre line.

As regards the whipping in the bending moment at the centre line, as a first approximation it is possible to limit the determination to the first vibration frequency of the beam, whereas as regards the vertical shear at ¾ it is necessary to consider also the higher order frequencies.

Finally, it is important to note that as regards the shearing forces and the moment, the distinction of whether the action of such forces tends to hog the ship beam or to sag it, sagging condition and hogging condition, is considered.

The object of the present invention is to provide a device for operator guidance of a ship which should allow predicting the structural dynamic behaviour of the ship upon the variation of the sea condition and/or of the navigation parameters.

More in particular, providing equipment or a device which should allow keeping into account the effect of the wave impacts on the hull, and of the consequent vibrations of the hull beam, on the overall dynamic loads.

This whipping phenomenon plays a fundamental role in limiting the ship speed for structural safety purposes, should this encounter especially unfavourable sea conditions.

An advantage of the present invention is to provide a device for operator guidance of a ship which should allow predicting the structural dynamic behaviour of the ship upon the variation of the sea condition and/or of the navigation parameters taking into account the so-called whipping phenomenon.

A further advantage of the present invention is to provide a device for operator guidance of a ship which based on the current and/or predictable sea conditions should allow determining the best navigation in terms of route and speed, aiming at respecting predetermined structural safety conditions of the ship.

A further advantage of the present invention is to provide a device for operator guidance of a ship which based on the current and/or predictable sea conditions should allow determining the best navigation in terms of route and/or speed, aiming at respecting predetermined comfort conditions for the passengers.

A further advantage of the present invention is to provide a device for operator guidance of a ship which while respecting predetermined structural safety conditions of the ship and/or comfort for the passengers and/or travelling times, based on the current and predictable sea conditions should allow determining in terms of route and/or speed, the navigation that should minimise fuel consumption.

One of the qualifying aspects of the system is the possibility of taking into account the effect of the wave impacts on the hull and of the consequent vibrations of the hull beam, allowing the determination of the overall dynamic stresses.

According to an embodiment, the system uses a database of the pre-calculated dynamic response of the ship in a wavy sea. Instead of using response operators (that is, the ship response to a single component of the wavy sea) and calculating on-line the actual response to the sea condition encountered by the ship combining the pre-calculated response operator with the sea spectrum measured by the wave radar, a solution highly sensitive to radar detection errors, the solution proposed herein uses a database wherein the ship response to a predetermined set of sea conditions has already been pre-calculated: thus, according to an embodiment, no on-line direct calculation is performed but rather a simple interpolation between current sea condition and pre-calculated sea conditions, determining the pre-calculated response accordingly. The solution proposed herein approximates the effective sea condition with a multi-parameter model, resulting very robust, hardly subject to radar measurement errors and very flexible.

According to an embodiment, it is possible to base on a hypothesis of linearity between wave excitation and ship response, but since the proposed solution is not necessarily constrained to such assumption, as on the contrary known solutions require, wherein the response operators are combined, it is possible to prepare the database by a systematic series of non-linear calculations so as to determine, for example, the difference between sagging moment and hogging moment of the wave, rather than approximate by a coefficient extrapolated by the rules, with a priori calculations carefully made with non-linear determinations.

These objects and the advantages are achieved by a device for operator guidance of a ship as described in the claims below.

According to an embodiment, the main components of the proposed system are:

**[0058]** - Onboard GPS, for measuring the ship speed and direction;

**[0059]** - Onboard radar in *'Band-X'*, used in *'short pulse'* mode to feed the *'wave radar'* system;

**[0060]** - PC workstation with monitor whereon both software such as for example *MIROS* and that suitable for performing the functions described herein are installed;

**[0061]** - 'Wave radar' system, for example of the type produced by *MIROS, 'Wavex',* for measuring the sea height and period at the ship;

**[0062]** - Software, directly interfaced with the *'wave radar'* system for forecasting the overall dynamic loads and motions, integrated with the determination of the *'whipping'* contribution;

**[0063]** - Graphic User Interface (GUI) to display the data processed by the software and their interactive presentation to the ship's officers.

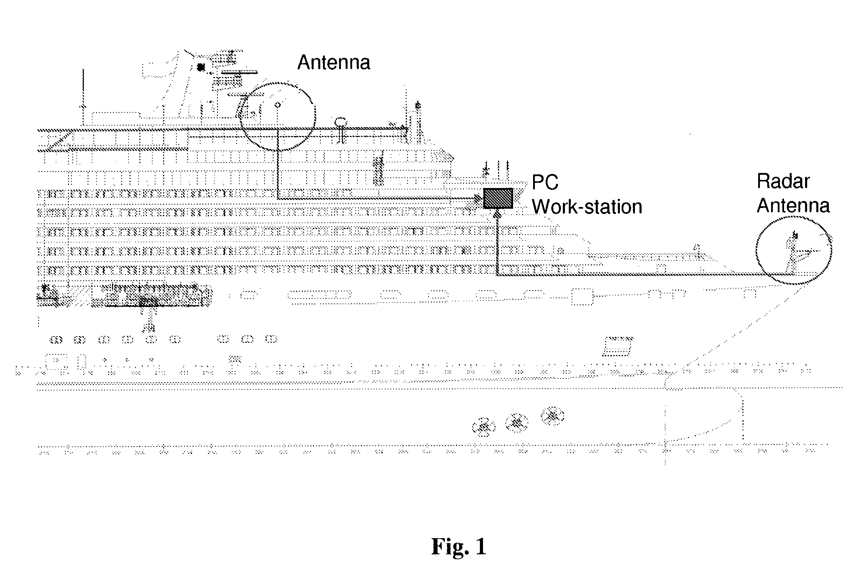

The system functional layout is shown in Figure 1.

Both the software for example of the type *MIROS* for measuring the sea condition, and the software that implements the operations proposed herein for processing the ship dynamic behaviour shall be installed, for example, on the same PC workstation, console with keyboard and monitor.

Such console shall receive the bow radar signal, the onboard GPS signal and the 220V 50-60Hz power supply.

According to an embodiment, for proper operation of the *'wave* radar' system, a radar in *Band-X* should be used, which should be able to operate in *'short pulse'* mode for about 15 continuative minutes to ensure a good quality reproduction of the sea condition; moreover, the radar should be positioned so as to cover an angular sector, for example, of about 180° at a certain distance from the ship, but excluding the abaft zone where the wake caused by the ship movement and by the propulsors is concentrated.

This poses strict restrictions on the possible use of a navigation radar, which must operate in *'long pulse'* mode, so it is often necessary to install a dedicated radar. For the present application, on the contrary, it will be possible to use for example, an auxiliary navigation radar, located in the ship bow end, which is used only during the navigation in restricted waters or in zones with a risk of icebergs and would thus be available for acquiring the sea conditions.

The lay-out of the prototype installation on the ship is shown in Figure 1.

The radar is selected for example of the type produced by *SAM,-* is complete with an interface box called *SRA interface box',* for example as described in document EBook_SRA *'Interface technical manual'* ED3046G342.

According to an embodiment provided separated or in combination with what described above and optionally below, the system, for example, WAVEX requires in input both the GPS signal and optionally, the gyrocompass signal. The GPS signal, travelling for example on serial RS-422 must contain the following strings in format NMEA (National Marine Electronic Application, the standard format of GPS data strings): VTG (string associated to Course & Speed over Ground), ZDA (string associated to Time & Date UTC) and GLL (string associated to Geographic Position Latitude / Longitude); the gyrocompass signal, also travelling on serial RS-422, must contain the following string in format NMEA: HDT (string associated to the True Heading signal of the gyrocompass). Given the optional connection with the gyrocompass and considering that the gyrocompass signal is not strictly required for proper system operation, according to an embodiment only the GPS signal is used, modifying the MIROR software accordingly.

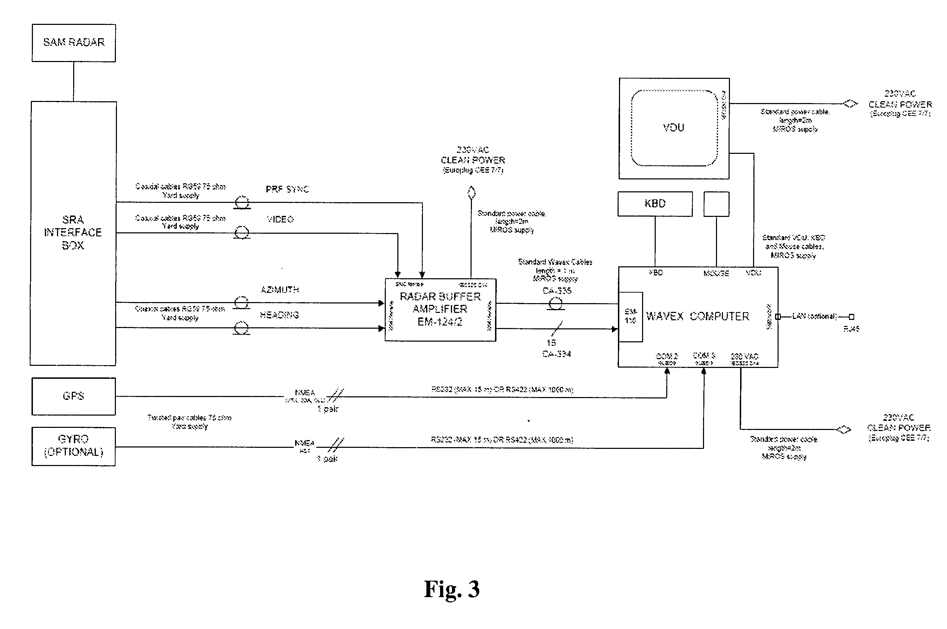

According to an embodiment, a prototype hardware layout is illustrated in Figure 3, wherein:

**[0073]** - PRF Sync is the synchronisation signal (Pulse Repetition Frequency);

**[0074]** - VDU and KBD respectively are the monitor and the keyboard of the WAVEX workstation; :

**[0075]** - LAN is the onboard network (Local Area Network) ;

**[0076]** - and the radar is for example selected of the type Radar SAM model 1000 in Band X, with emissions in the frequency range between 7 and 12.5 MHz.

Below is a functional description of the proposed solution.

One of the advantages of the system proposed is to show the ship officers the short term and also medium long term consequences of a decision on the change of current route/speed based on the sea conditions actually experimented by the ship during the navigation or based on weather forecasts expected in the planned route.

The following is required for short term planning:

**[0080]** - a measurement of the sea conditions in the proximity of the ship, in terms of wave height and period;

**[0081]** - a mathematical model of the ship capable of forecasting with reasonable accuracy the dynamic behaviour of the latter based on the operating and sea conditions.

As regards the first point, the solution proposed uses, for example, a *WAVEX* type system produced by *MIROS* capable of reconstructing with reasonable accuracy the directional sea spectrum in the proximity of the ship.

The system core in any case is the ship model. To this end, the applicant has used the considerable experience gained over the years with several research projects.

To predict the rigid body motions and the overall dynamic loads induced directly by the wavy sea, the calculation model developed and validated in many years of research is used. Such calculation package is capable of performing both the conventional linear forecasts in the frequency domain and non-linear simulations in the time domain.

To predict the effect of hull beam vibrations (or own vibration motions for example excited by the sudden slamming impact, similar to a pulse applied to the hull beam) induced by the impact pressures on the overall dynamic loads, reference is always made to the know-how generated in these years of research and development.

Such research has shown, by experimental tests, that the contribution of whipping to the bending moment at the centre line for cruisers with wide bow flares in some conditions may be of the same extent or even greater than the wave moment. This is very important for the structural safety of ships, for example cruisers navigating in exposed sea zones, preventing the ship officer of a large sized ship from underestimating the effect that a wrong choice of route/speed may have in predetermined sea conditions in terms of overall stresses on the ship. In fact in certain conditions, the combination of wave and whipping could lead the total bending moment at the centre line such as to exceed the sizing values adopted during the ship design.

The solution proposed immediately informs the ship officer of the possible hazards for the navigation, clearly displaying the result that the current choice of route/speed in the current conditions of the sea implies in terms of ship, load and passengers safety.

Unlike other operator guidance systems, the solution proposed according to an embodiment thereof does not directly suggest a predetermined change of route/speed to the ship officer but leaves the decision of the choice fully to the officer based on his experience and based on his assessment of the situation, simply displaying the predicted effect of the different possible variations of the operating parameters. In this perspective, among all the different information that may be obtained from the system as a general rule, 5 quantities deemed the most significant in conjunction or separated have been selected:

**[0089]** - total vertical bending moment at the centre line, given in calm sea vectorially added to that given by the wave vectorially added to that given by the *'whipping',* in condition of *'sagging'* ship; and/or

**[0090]** - total vertical bending moment at the centre line, given in calm sea vectorially added to that given by the wave vectorially added to that given by the *'whipping',* in condition of *'hogging'* ship; and/or

**[0091]** - total vertical shear at ¾ of the ship length at the bow, given in calm sea vectorially added to that given by the wave vectorially added to that given by the *'whipping';* and/or

**[0092]** - vertical acceleration at ¾ of the ship length on the upper deck; and/or

**[0093]** - cross acceleration at ¾ of the ship length on the upper deck.

The bending moment at the ship centre line and the vertical shear at ¾ of the ship length at the bow are the two most important quantities from the point of view of the hull beam sizing and thus of the ship structural safety.

The vertical and cross accelerations in a suitable selected reference point, on the contrary, are the two most important quantities from the point of view of the passenger's safety and comfort.

According to an embodiment, it is possible to provide additional information, such as the distribution of dynamic loads and accelerations on the entire ship length and the determination of the passenger comfort index associated to seasickness, and potentially acquire and process additional signals, for example accelerometric/strainmetric measures to integrate the current forecasts, or measures of torque/revolutions/fuel flow to also predict the fuel consumption of propulsion motors based, for example, on route, speed and sea condition.

Finally, it is noted that the solution, besides processing the information coming from the *'wave radar',* can also operate with alternative modes: for example, it receives the data of a weather forecast and use them to simulate the ship behaviour in the forecasted sea conditions.

According to an embodiment, the device can propose to the ship officer the route and/or the speed that stress the ship structure the least with the actual sea conditions and/or with the conditions of weather-sea forecasts and/or of simulations of sea conditions.

According to an embodiment, the device can propose to the ship officer the route and/or the speed that do not cause trouble (such as accelerations) to the passengers and/or the ship load with the actual sea conditions and/or with the conditions of weather-sea forecasts and/or of simulations of sea conditions.

According to an embodiment, the device can propose to the ship officer the route and/or the speed that use the least fuel with the actual sea conditions and/or with the conditions of weather-sea forecasts and/or of simulations of sea conditions.

Below is the description of an example of assessment method proposed.

According to an embodiment, the system installed onboard does not make direct calculations of the ship dynamic behaviour, a solution not very robust and expensive from the computational point of view, but it simply interpolates the pre-calculated results for predetermined sea conditions at the current sea/operating conditions.

To this end it is first necessary to set up a series of tables prior to the system installation onboard. The calculations are for example made for the following conditions:

**[0104]** - 13 encounter angles between 0° sea at the bow and 180° sea at the stern, for example every 15°;

**[0105]** - ship speed between 0 and 25 knots, for example every 5 knots;

**[0106]** - 8 sea periods between 6 and 22 seconds, for example every 2 seconds.

As already mentioned, the preparation of these results requires an accurate knowledge of the ship geometry, of its load conditions (load distribution) and its structural features and can be carried out with linear or non-linear calculation techniques.

The processing that for example qualifies the solution proposed is, in particular:

**[0109]** - determination of the contribution to the shear and to the moment due to the wave contributions;

**[0110]** - determination of the impact forces on the ship bow zone and consequent excitation on the motions of the entire hull;

**[0111]** - determination of the contribution to the shear and to the moment due to the impact forces;

**[0112]** - combination of the wave contribution and the impact contribution or *'whipping'*.

The correct combination of the wave and '*whipping'* contributions is essential for a reliable forecast of the shear/ moment resulting on the ship and special attention has therefore been given thereto.

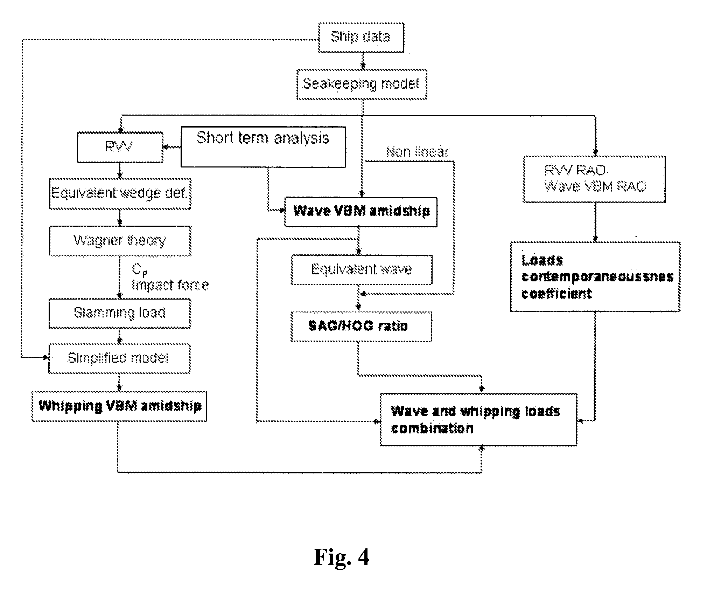

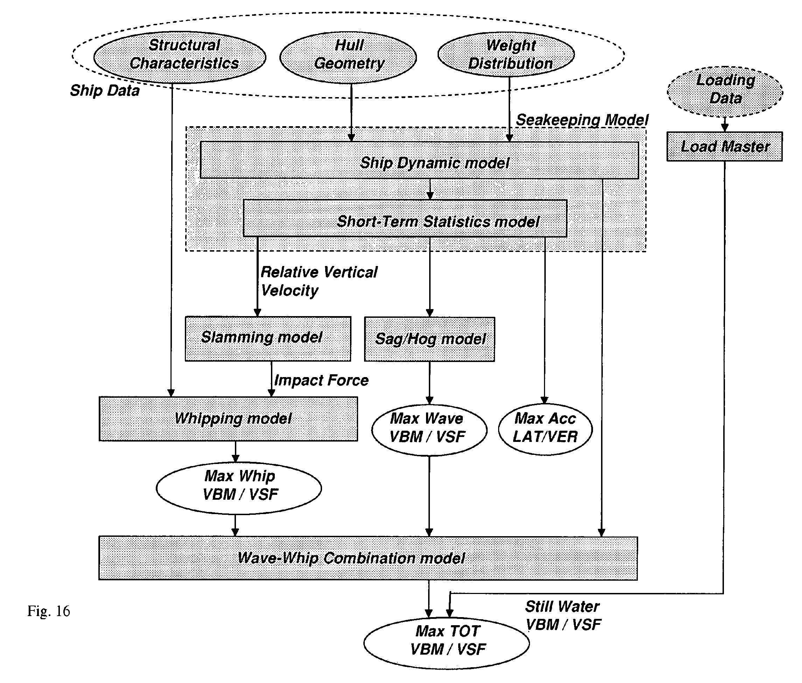

The functional diagram of the calculation model implemented in the software is illustrated in Figure 4 or, according to an embodiment variation of Figure 16.

All the quantities directly related to the wave are calculated, for example using the above code type *PRECAL.*

The sagging / hogging (sag/hog) factor, according to a first embodiment, is set equal to the standard one, even if according to a second embodiment the non-linear version of the program allows direct calculation.

A set up and validated procedure has been used to calculate the impact pressure. According to an embodiment, the Wagner theory is used which allows determining the impact pressure of a wedge that penetrates with constant speed in an undisturbed free surface.

For a cylindrical wedge with deadrise (inclination angle relative to the horizontal) equal to β, the maximum pressure coefficient is as follows:

$\quad C_P = \dfrac{\pi^2}{4 \cdot tg^2\beta}$ where 'tg' is the 'tangent' function.

In this case, the flow around the wedge is assumed, for example, two-dimensional. In the case at hand, the coefficient (non-dimensional) $C_p$ is defined as:

$$C_p = \frac{F_{imp}}{\frac{1}{2}\rho \cdot S \cdot RVV^2}$$

wherein:

**[0123]** - Fimp is the impact force acting on the ship bow end (compared to a prism having constant section)

**[0124]** - S is the area of the zone impinged by the impact

**[0125]** - RW is the vertical relative speed between ship and wave ('RVV' means 'Relative Vertical Velocity')

**[0126]** - ρ is the water density.

It is therefore necessary to define the equivalent wedge representing the 'bow flare' and the relative vertical speed (RVV) of a significant section of said 'bow flare'.

The wedge is taken of a length equal to Lpp/20 (where Lpp stands for 'length between the perpendiculars', a standard measure of the ship length), with 'deadrise' angle equal to the tangent at the point where the section (taken as station 20) has the flexed and with height equal to the central part of the 'bow flare' limited by the above tangent.

The relative vertical speed is determined on a statistical basis (with short term analysis) referred to station 20 (PpAV).

It should be noted that the 'exposure time' is the time for which it is assumed to determine the expected short term value of the quantity: the longer this time interval, the greater the maximum expected value.

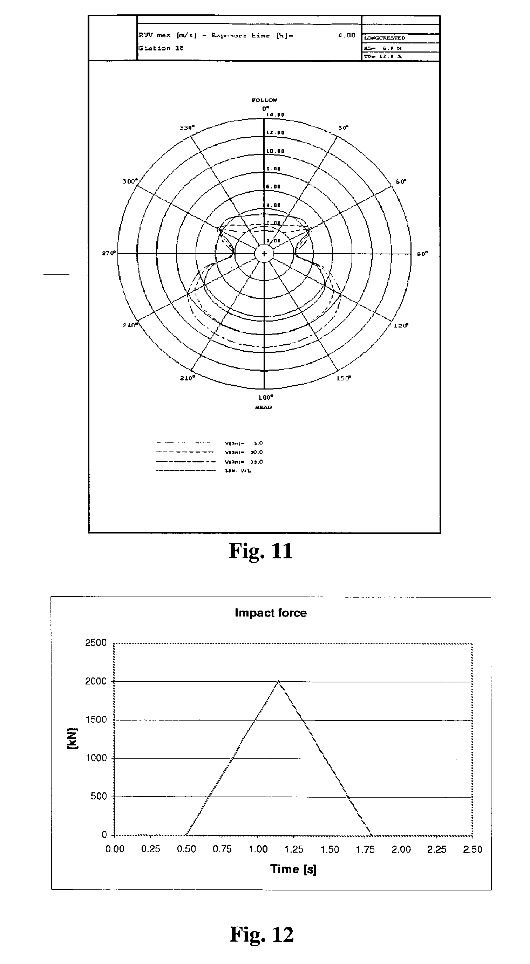

The Wagner formula then allows determining the maximum impact force. To obtain the whipping strains it is necessary to define the temporal history of the slamming pulse. The analysis of the experimental data has allowed estimating a characteristic shape and duration of a typical pulse, with triangular shape, as shown in Figure 12.

As regards the ship's own vibration modes, according to an arrangement which is not part of the invention, simplified models with concentrated masses and yields are used. According to the invention, finished element models are used which are validated experimentally during the ship make. In the finished element 3D model the ship is schematised reproducing all the internal and external structures so that the discretization allows suitably reproducing the dynamic behaviour of the structure, especially from an overall point of view.

In two other arrangements, which are not part of the invention whipping stresses are determined by two models:

- the so-called "simplified model" (for the prediction of the vertical bending moment at the centre line only); and

- the uneven beam model of Timoshenko for the additional prediction of the vertical shear at ¾ at the ship bow.

According to the invention

**[0135]** - such stresses are determined by finished element simulation (FEM).

The model takes into account:

**[0137]** - the local thrust variation to the vertical moment related to the vibration, for example through a system of vertical springs suitably calibrated;

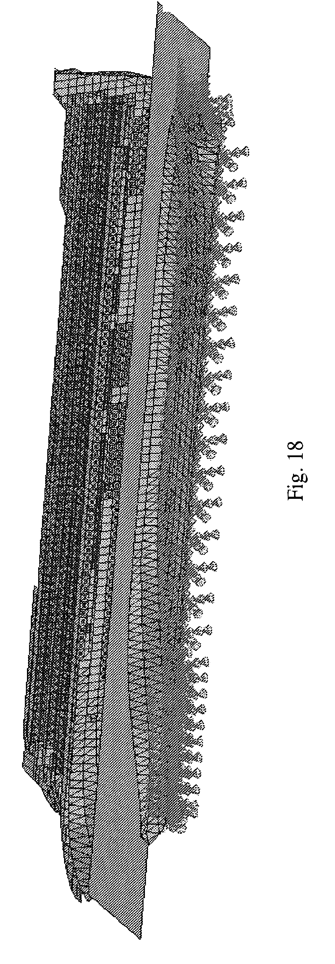

**[0138]** - the contribution of the mass added to the overall dynamic behaviour, for example through routines of the type MFLUID of MSC.Nastran (Figure 18).

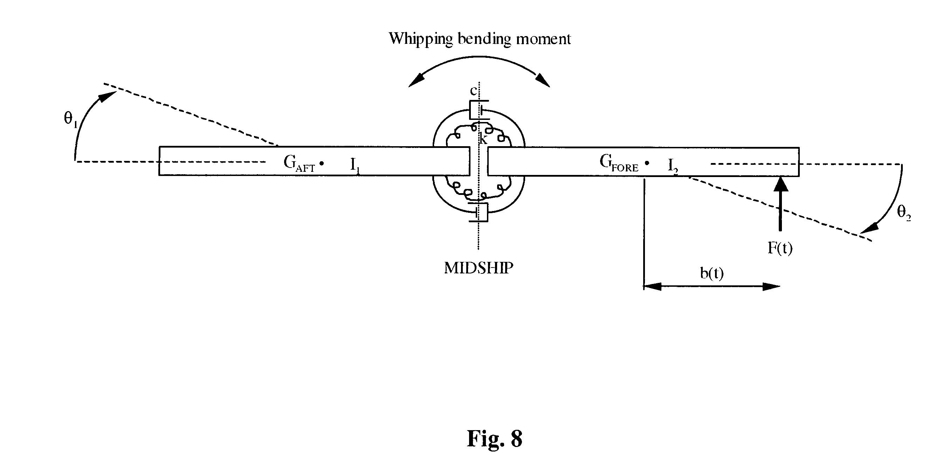

In particular, the simplified physical model consists of two beams connected by a torsion spring that simulates the elasticity and of a torsion damper that simulates the torsion damping (Figure 8).

This model reproduces the equipment in a mathematical manner to simulate the elasticity of the ship beam used in a whipping test campaign. The spring calibration allows obtaining a model with the same frequency of the first way of vibrating of the ship.

On the other hand, as regards the combination of wave and '*whipping*,' according to a first embodiment, it is assumed that the maximum relative vertical speed and the slamming impact force are in perfect phase: in this sense, for the combination with the wave loads, it is possible to directly operate on the response operator (RAO) of the relative vertical speed, both in terms of phase and amplitude.

The combination of wave loads and whipping is based on the consideration that the two events (impact force and vertical bending moment) do not take place at the same time, but are characterised by a delay related to the' RVV (' RVV' means 'Relative Vertical Velocity') and VBM (that is, 'Vertical Bending Moment') steps relative to the incident wave. At the same time, it is not correct to consider the sum of the maximum values obtained from the short term forecast: the maximum of the two events does not take place at the same time. The delay of the impact force relative to the vertical bending moment is calculated as follows:

$$\Delta t_{VBM} = \frac{\varepsilon_{VBM} - \varepsilon_{RVV}}{\omega_n}$$

The delay of the impact force relative to the vertical wave shear is calculated as follows:

$$\Delta t_{VSF} = \frac{\varepsilon_{VSF} - \varepsilon_{RVV}}{\omega_n}$$

wherein:

**[0147]** - $\varepsilon$ indicates the phase relative to the incident wave of the reference quantities

**[0148]** - $\omega_n$ is the peak frequency of the corresponding response operator.

From the short term statistics it is possible to obtain the maximum values (MAX$_{ST}$) of the quantity considered starting from the relevant RMS value and from the exposure time (T$_e$).

$$MAX_{ST} = \sqrt{2} \cdot RMS \cdot \left[ (\ln N)^{1/2} + 0.2886(\ln N)^{-1/2} \right]$$

wherein:

$- N = \dfrac{T_e \cdot 3600}{T_z}$ is the number of events in the exposure time

**[0153]** - Tz = mean period of the considered quantity

**[0154]** - Ln is the 'natural logarithm' function

In particular, the following values have been calculated

**[0156]** - MAX$_{ST\,RVV}$ referred to station 20 and the equivalent whipping moment;

**[0157]** - MAX$_{ST\,VBM}$ calculated at the centre line;

**[0158]** - MAX$_{ST\,VSF}$ calculated at 0.75 L$_{PP}$ from the back perpendicular ('VSF' means 'Vertical Shear Force').

These cases of combination may be of two types:

**[0160]** - Case A: sum of the maximum wave moment at the whipping moment that takes place at the maximum wave moment;

**[0161]** - Case B: sum of the maximum whipping moment at the wave moment that takes place at the maximum whipping moment.

Case A: Overlapping of maximum wave moment and corresponding whipping.

An equivalent wave is defined with the following features:

**[0164]** - frequency equal to the resonance of the RAO ('RAO' means 'Response Amplitude Operator' in amplitude and phase of any quantity associated to the ship dynamics in wavy sea) of the vertical wave bending moment ($\omega_{VBM}$);

amplitude calculated as follows:

$$a_{WAVE} = \frac{MAX_{ST\,VBM}}{RAO_{VBM}(\omega = \omega_{VBM})} \cdot$$

The equivalent wave therefore is the regular wave that generates vertical hogging bending moment equal to that calculated by the short term statistics. As a consequence, the relative vertical speed and the vertical shear due to the equivalent wave are calculated as follows.

$$RVV_{VBM} = RAO_{RVV}(\omega = \omega_{VBM}) \cdot a_{WAVE}$$

$$VSF_{VBM} = RAO_{VSF}(\omega = \omega_{VBM}) \cdot a_{WAVE}$$

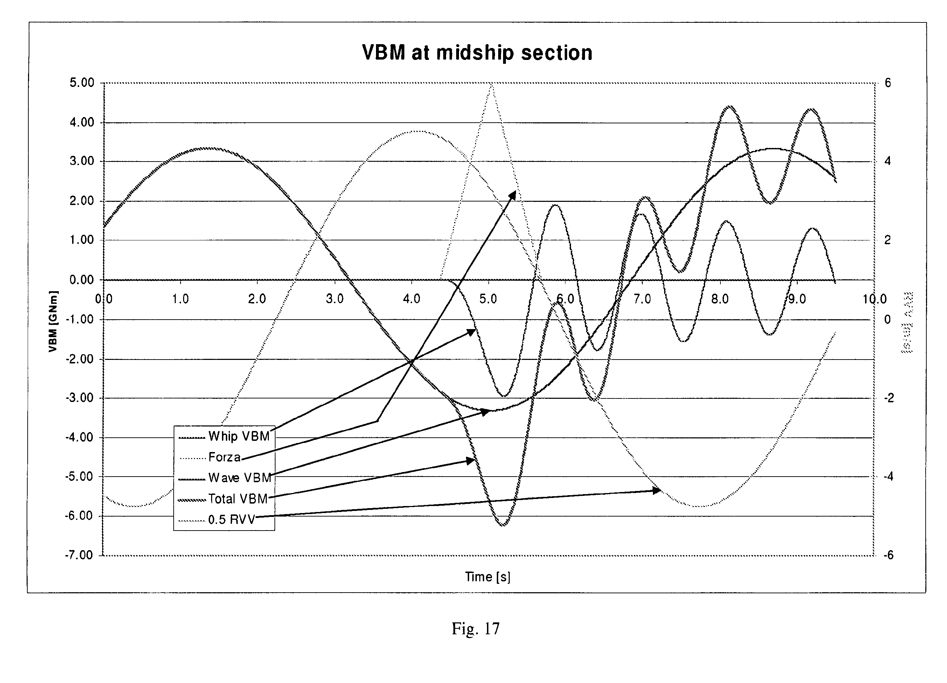

With the determined speed value, suitably considering the difference, the slamming impact force is calculated and the temporal history of the pulse is defined, wherewith through the models described above, the whipping moment and shear stresses are calculated (Figure 17).

The shear is calculated in a similar manner: the whipping contribution is calculated starting, for example, from the same value of relative vertical speed, whereas the wave contribution calculation takes place starting from the value VSF$_{VBM}$, suitably taking into account the difference with the relative vertical speed.

Case B: Overlapping of maximum whipping moment and corresponding wave.

An equivalent wave is defined with the following features:

**[0173]** - frequency equal to the resonance of the RAO of the relative vertical speed (ωRVV);

**[0174]** - amplitude calculated as follows:

$$a_{whip} = \frac{\mathrm{MAX_{ST\ RVV}}}{\mathrm{RAO}_{RVV}(\omega = \omega_{RVV})}$$

The equivalent wave therefore is the regular wave that generates relative vertical speed equal to that calculated by the short term statistics.

As a consequence, the vertical bending moment and the vertical wave shear due to the equivalent wave are calculated as follows.

$$VBM_{whip} = RAO_{VBM}(\omega = \omega_{RVV}) \cdot a_{whip}$$

$$VSF_{whip} = RAO_{VSF}(\omega = \omega_{RVV}) \cdot a_{whip}$$

The impulse is applied at the time of maximum relative speed. The wave contribution to the bending moment is calculated with the value of vertical wave bending moment determined, suitably considering the difference.

The shear is calculated in a similar manner: the whipping contribution is calculated starting, for example, from the value of relative vertical speed, whereas the wave contribution calculation takes place starting from the value $VSF_{VBM}$, for example, suitably taking into account the difference with the relative vertical speed.

To calculate the resulting effective moment in a given sea condition, the procedure is as follows.

The vertical bending moment and the total vertical shear are divided (in both cases A and B) into the relative wave and whipping contributions. In particular, the overlapping takes place:

1. - combining the maximum wave and whipping contributions (relative to a unit wave height) by suitable coefficients calculated on the basis of considerations related to the differences between relative vertical speed and wave stresses (consistent with the sign conventions used by the PRECAL) ;

2. suitably deducting the values obtained relative to the reference wave height (Hs).

In this meaning it is necessary to calculate some characteristic quantities from the theoretical models used to predict the whipping stresses, and in particular:

**[0186]** - the vertical whipping bending moment calculated for unit relative vertical speed ($M_{whip}^{1-1}$) ;

**[0187]** - the vertical whipping shear calculated for unit relative vertical speed ($VSF_{whip}^{1-1}$) ;

**[0188]** - the delay between the moment of maximum relative vertical speed and the moment of maximum whipping moment ($t_{LAG\ VBM}$);

**[0189]** - the delay between the moment of maximum relative vertical speed and the moment of maximum whipping shear ($t_{LAG\ VSF}$).

Below is an embodiment of the user interface.

The problem of a clear display of the system processing to the ship officer is very important for a satisfactory use thereof.

To this end, a graphical interface allows the user not just to display the processing results but also the interactive control thereof.

As already mentioned, the prediction system according to an embodiment is installed on the same console of the *WAVEX* system, the interface will therefore have 2 main windows: one will giver access directly to the standard graphic interface of the WAVEX system, the other to the graphical interface of the system proposed herein.

Among the various information displayed by the WAVEX system, the most important ones from the forecasting point of view are two: the wave height in metres ('Significant Wave Height') and the wave period in seconds ('Primary Wave Peak Period').

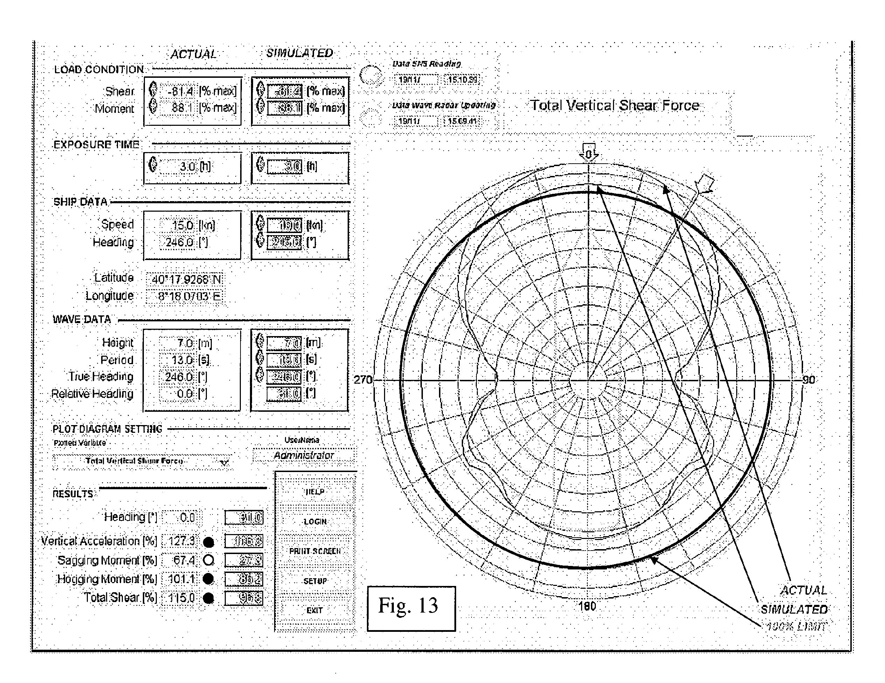

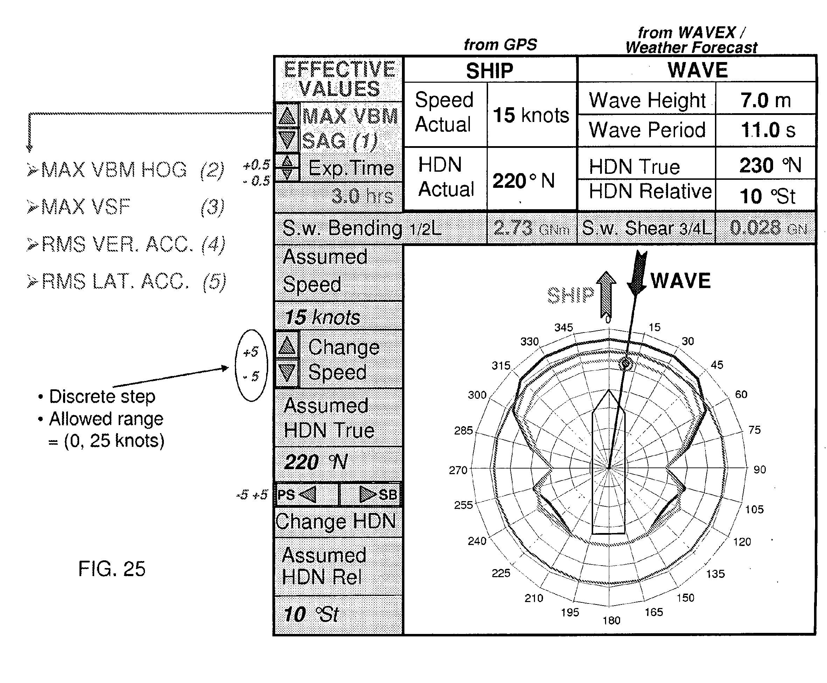

According to an embodiment, post the interface shown for example in Figure 25 or 13.

In determining the shear and the bending moment it is necessary to refer to the current load condition of the sea, which may be either 'sagging' or hogging', an information that the ship officer can easily retrieve from the onboard system and manually or automatically enter to the forecasting system.

The shear and bending moment results are presented as maximum expected values after a certain time of exposure to the current sea conditions, exposure time that can be changed by the commander but in any case it should not be more than the typical duration of a sea condition (less than 6 hours). Such values are compared with the maximum admissible values prescribed by the classification company and adopted by the designer.

The results of the vertical/cross accelerations on the other hand, are presented as so-called rms values, that is, average quadratic deviation, independent of the exposure time. Such values have importance more from a statistical point of view than from a physical point of view, in any case they were chosen since the passenger comfort criteria used at an international level are expressed in these terms.

The User can thus choose the quantity to be displayed and he/she has an immediate view of the criticality of the situation comparing the current values forecasted by the system based on the current operating/sea conditions with the limits, limits which for example are well highlighted in red.

The system does not just display the punctual situation corresponding to the current ship route, but it already displays the forecast of the values that the selected quantity would take for all the different route angles so as to facilitate the choice of a different route angle.

The system user can easily simulate the effect of a different ship speed or a different route angle decreasing/increasing with discrete steps the route/speed values compared to the current values.

BRIEF DESCRIPTION OF THE DRAWINGS

Further features and advantages of the apparatus according to the invention will appear more clearly from the following description of some preferred embodiments thereof, given by way of a non-limiting example with reference to the annexed figures, wherein:

**[0204]** - figure 1 shows an installation lay-out of the device for operator guidance of a ship according to a preferred embodiment;

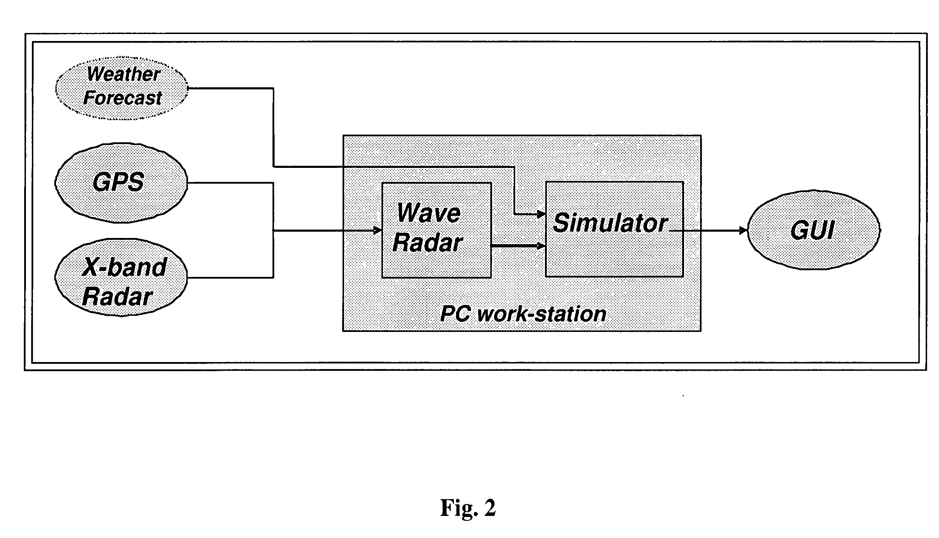

**[0205]** - figure 2 shows a functional diagram of the device for operator guidance of a ship according to a preferred embodiment;

**[0206]** - figure 3 shows the hardware layout of the device for operator guidance of a ship according to a particular embodiment;

**[0207]** - figure 4 shows a block diagram of the functional diagram of the calculation model implemented in the apparatus according to a preferred embodiment of the invention;

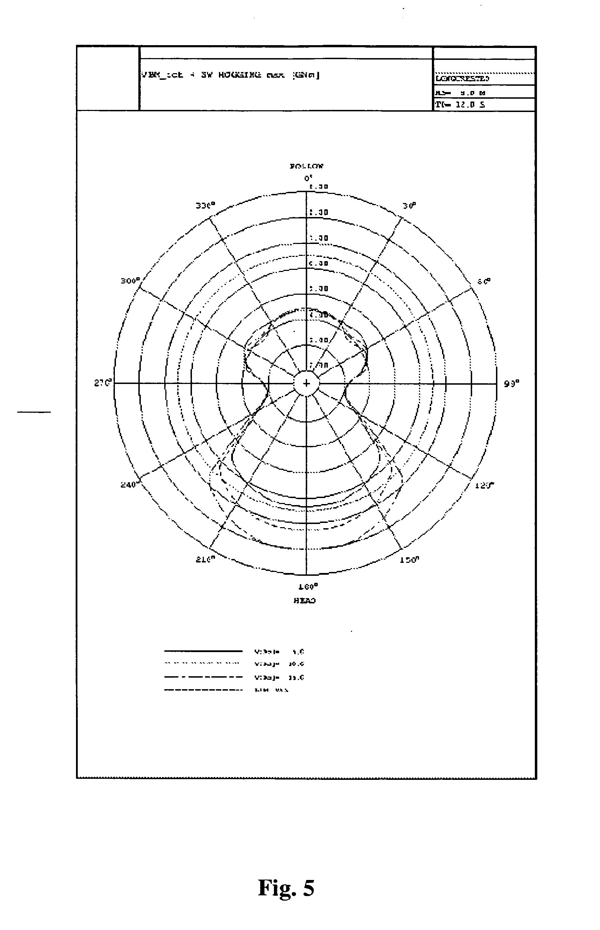

**[0208]** - figure 5 shows an example of a polar diagram relating to the bending moment of the wave at the ship centre line, having the wave height, the wave period and the predictable duration of the sea condition, curves for different ship speeds and the bending moment in calm water at the centre line of the ship as parameters;

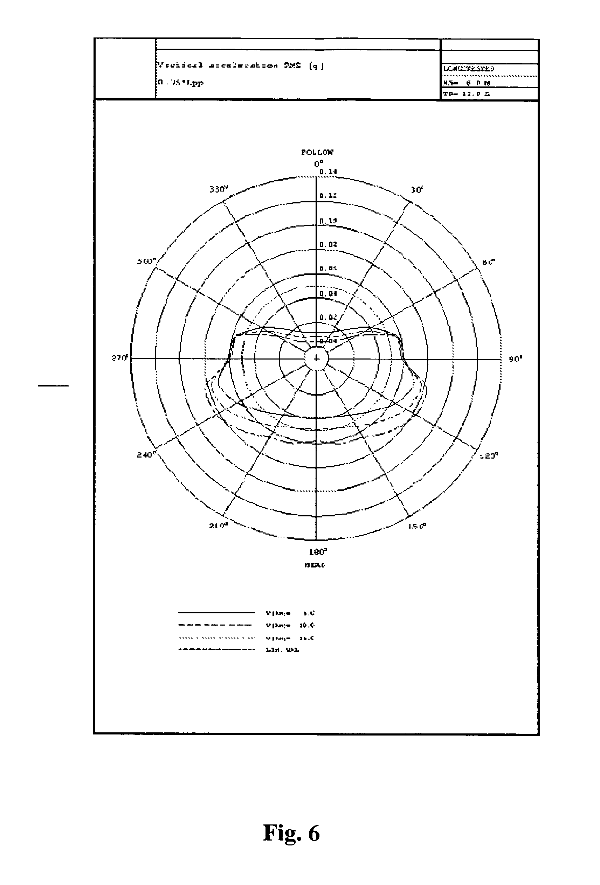

**[0209]** - figure 6 shows an example of a polar diagram relating to the vertical accelerations at 0.75 L, having the wave height, the wave period, the predictable duration of the sea condition and curves for different ship speeds as parameters;

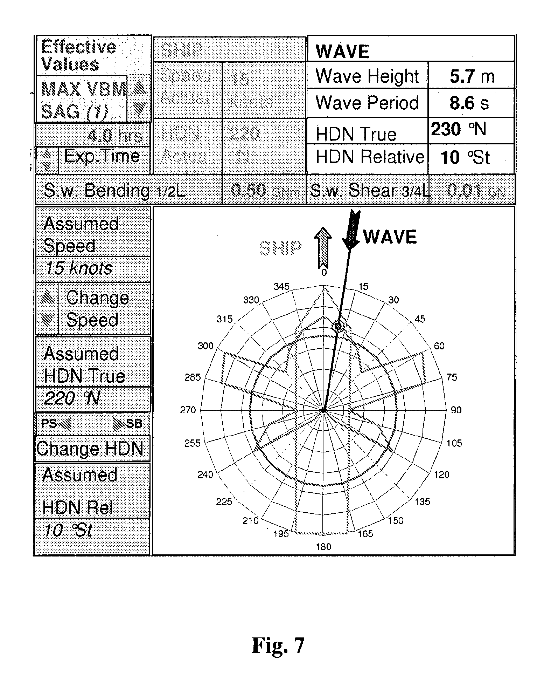

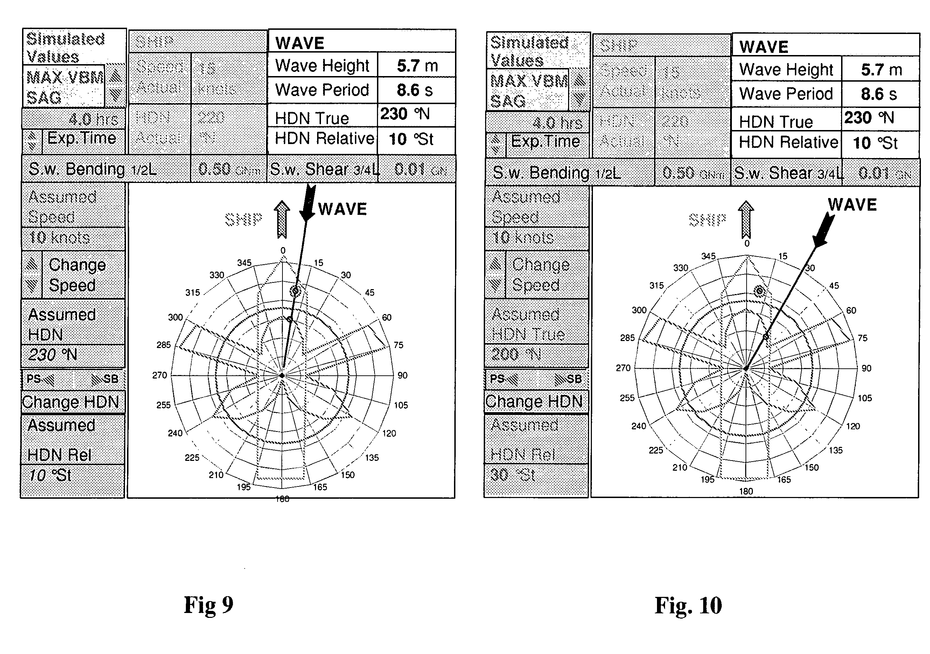

**[0210]** - Figures 7, 9 and 10 show an example of a graphical interface used in the apparatus according to a preferred embodiment of the invention;

**[0211]** - Figure 8 shows a simplified physical model used in the simulations of the structural dynamic behaviour of a ship. This is not part of the current invention.

**[0212]** Figure 11 shows a diagram relating to the statistical RVV forecast of a cruiser in a predetermined sea condition for different ship speeds and sea directions;

**[0213]** - Figure 12 shows an example of pattern of the impact force defined based on experimental data;

**[0214]** - Figure 13 shows a second example of graphical interface used in the apparatus according to a preferred embodiment of the invention in a first determination state;

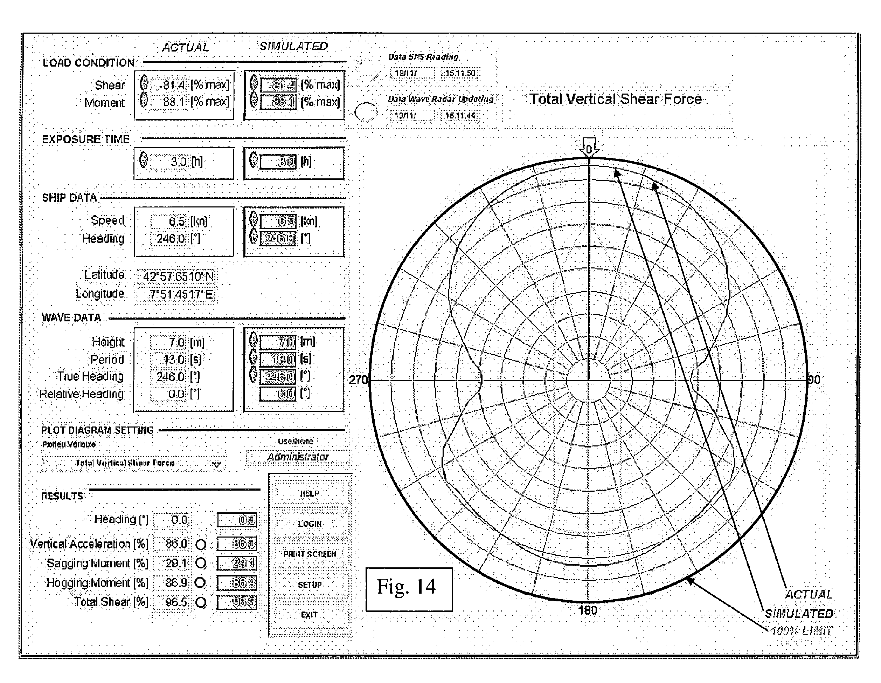

**[0215]** - Figure 14 shows the example of graphical interface used in the apparatus of figure 13 wherein a ship speed variation has been applied;

**[0216]** - Figure 15 shows a passenger ship subject to a wave pulse;

**[0217]** - figure 16 shows a block diagram of a functional diagram of the calculation model implemented in the apparatus according to a further preferred embodiment of the invention;

**[0218]** - figure 17 shows the pattern over time of the vertical bending moment (VBM) at the ship centre line as determined according to the invention;

**[0219]** - figure 18 shows an example of finished element modelling of a passenger ship structure;

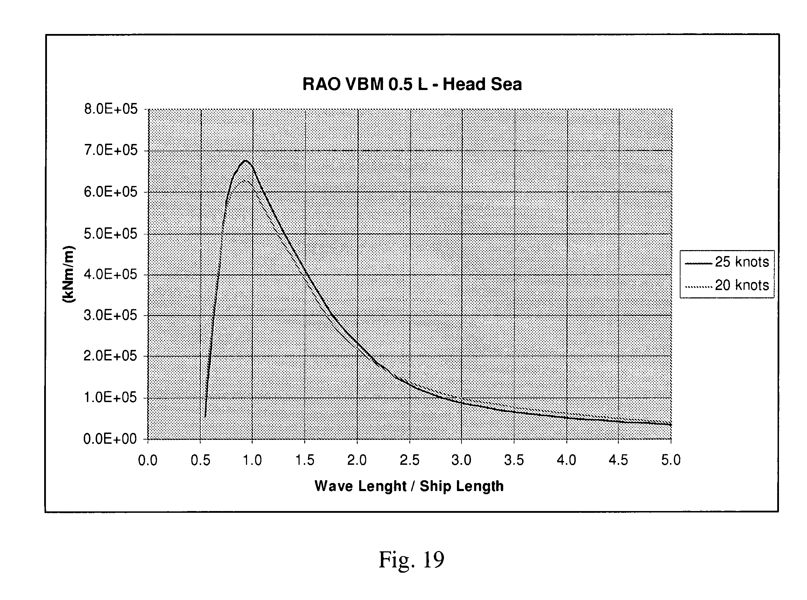

**[0220]** - figure 19 shows the pattern of the VBM based on the ratio between wave length and ship length, as determined by the system of the invention;

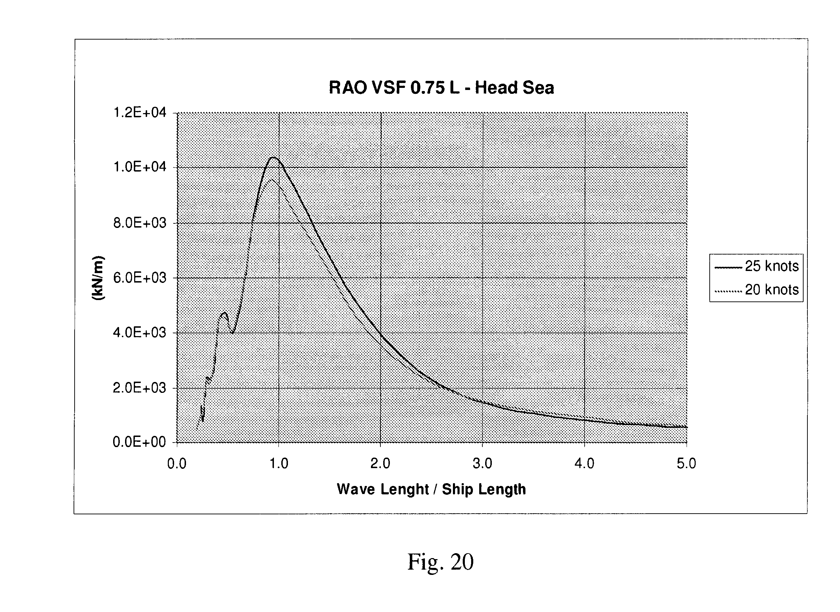

**[0221]** - figure 20 shows the pattern of the vertical shearing force based on the ratio between wave length and ship length, as determined by the system of the invention;

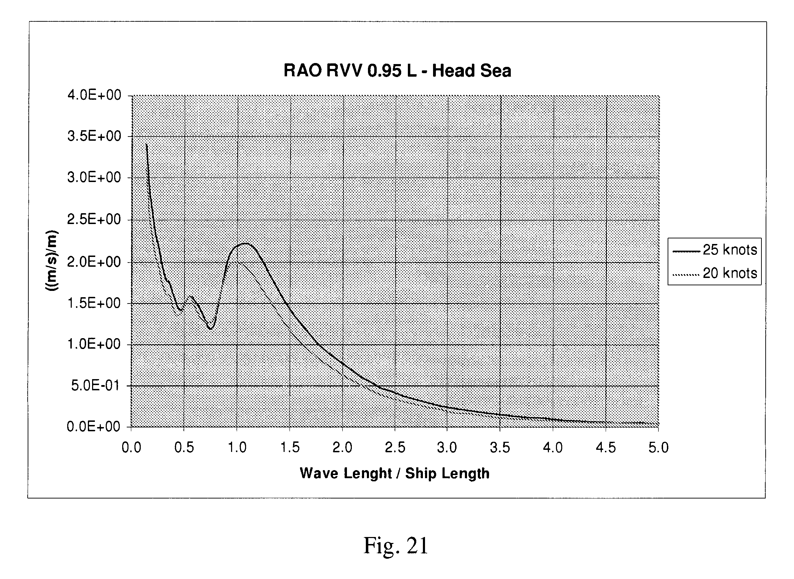

**[0222]** - figure 21 shows the pattern of the relative vertical speed at 0.95L based on the ratio between wave length and ship length, as determined by the system of the invention;

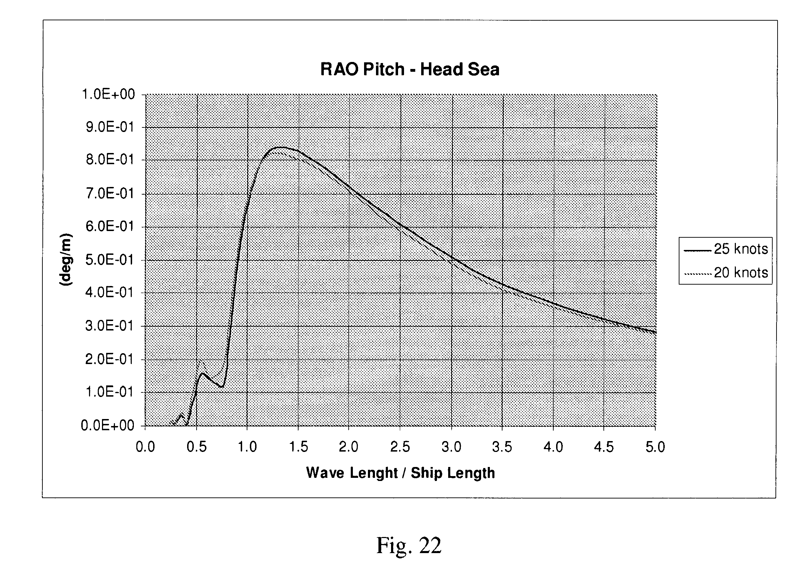

**[0223]** - figure 22 shows the pattern of the pitch based on the ratio between wave length and ship length, as determined by the system of the invention;

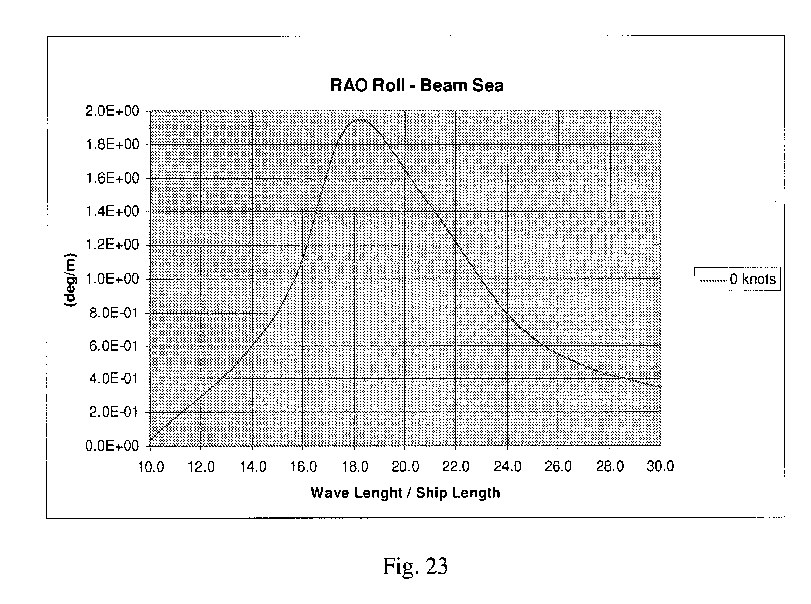

**[0224]** - figure 23 shows the pattern of the roll based on the ratio between wave length and ship length, as determined by the system of the invention;

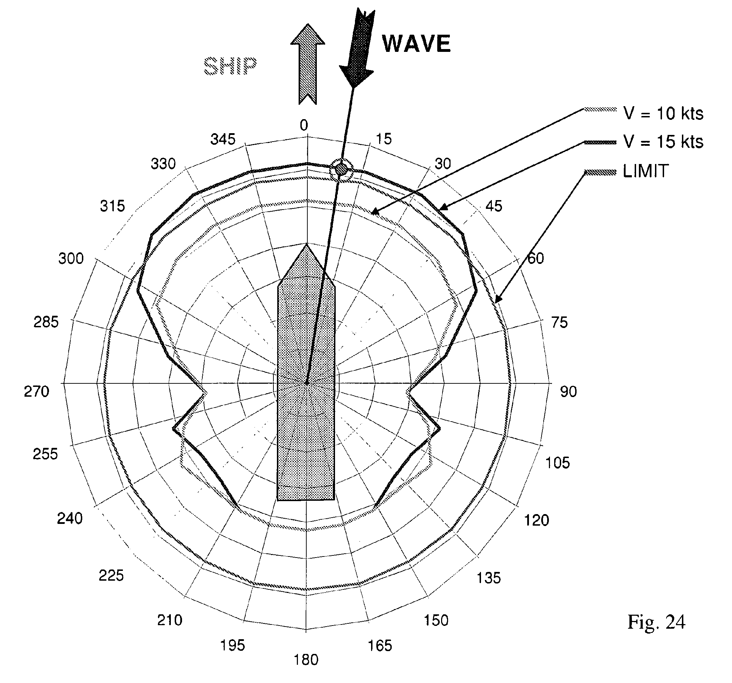

**[0225]** - figure 24 shows the pattern of the VBM determined according to the invention based on the route angle and the ship speed, compared with a project limit value for the ship structure;

**[0226]** - figure 25 shows a further example of a graphical interface used in the apparatus according to a preferred embodiment of the invention.

DETAILED DESCRIPTION OF THE PREFERRED EMBODIMENTS

According to a general embodiment, the device for operator guidance of a ship comprises means for measuring and providing a signal indicative of the ship speed, means for measuring and providing a signal indicative of the ship direction or advance route, means for measuring and providing a signal indicative of the sea energy spectrum.

Advantageously, the device further comprises means for processing the dynamic structural behaviour of said ship based on the sea energy spectrum, on the direction and speed of said ship.

Preferably, there are comprised also means for the graphical and/or numerical display of the simulation results to provide an operator guidance.

According to a general method for operator guidance of a ship, there are provided the steps of measuring and providing a signal indicative of the ship speed, as well as measuring and providing a signal indicative of the ship direction or advance route, and also of measuring and providing a signal indicative of the sea energy spectrum.

Advantageously, there is provided the further step of estimating the dynamic structural behaviour of said ship based on the sea energy spectrum, on the direction and speed of said ship.

Preferably, the further step of graphically and/or numerically displaying the simulation results to provide an operator guidance is followed.

According to a first possible use, the apparatus (or device) for operator guidance of a ship object of the present invention is used to show to the ship officers the short term consequences of a decision on the change of current route/speed on the structural dynamic behaviour of the ship based on the sea conditions actually encountered by the ship at the time or based on weather forecasts. To this end, the apparatus for operator guidance of a ship of the present invention is provided with means for the graphical and/or numerical display of the results of the simulation of the ship structural dynamic behaviour.

Operatively, the information that must be provided to the apparatus is substantially the following:

**[0233]** - a reliable measurement of the sea conditions (sea spectrum) in the proximity of the ship, in terms of wave height and period;

**[0234]** - a measurement of the ship speed and direction.

The apparatus is provided with a calculation system based on a mathematical model of the ship capable of forecasting with reasonable accuracy the dynamic behaviour of the ship itself based on the operating (speed and direction) and sea conditions.

To obtain a reliable measurement of the sea conditions, the apparatus according to the invention is provided with a system for determining the sea condition of the type known in the field as wave radar, that is, a system that using a radar mounted on board of the ship is capable, through the reflection of the radar echoes by the sea waves, of reconstructing the current directional spectrum of the sea in the proximity of the ship. By way of an example only, the system WAVEX produced by the Norwegian company MIROS is cited.

For the measurement of the ship speed and direction it is possible to use a GPS, optionally along with a gyrocompass.

The apparatus core consists of the calculation system and of the ship mathematical model implemented therein.

In general, the calculation model is capable of predicting the rigid body motions and the overall dynamic loads directly induced by the wavy sea, as well as the effect of the hull beam vibrations induced by the impact pressures on the overall dynamic loads (whipping phenomenon).

Preferably, to predict the rigid body motions and the overall dynamic loads induced directly by the wavy sea, the calculation model PRECAL developed and validated in more than 20 years of research is used. Such calculation package is capable of performing both the conventional linear forecasts in the frequency domain and non-linear simulations in the time domain.

Preferably, to predict the effect of the hull beam vibrations induced by the impact pressures on the overall dynamic loads, in particular a forecast procedure developed by the applicant is used. Such procedure was developed starting from a great know how, both theoretical and experimental, combined with studies conducted in the field of hydroelasticity and an accurate knowledge of the ship structure.

The calculation procedure, which shall be described in more detail hereinafter in a preferred embodiment thereof, was developed in particular to determine the contribution of whipping to the bending moment at the centre line that for example for cruisers with wide bow flares in some conditions may be of the same extent or even greater than the wave moment. This is very important for the structural safety for example of cruisers navigating in exposed sea zones, since the ship officer of a large cruiser often tends to underestimate the effect that a wrong choice of route/speed may have in predetermined sea conditions in terms of overall stresses on the ship. In fact in certain conditions, the combination of wave and whipping could lead the total bending moment at the centre line to exceed the sizing values adopted during the ship design.

The apparatus according to the invention therefore allows promptly informing the ship officer of the possible hazards for the navigation, clearly displaying the result that the current choice of route/speed in the current conditions of the sea implies in terms of ship and passengers safety.

According to this first possible use, the apparatus does not directly suggest a predetermined change of route/ speed to the ship officer but leaves the decision of the choice fully to him based on his experience and based on his assessment of the situation, simply displaying the predicted effect of the different possible variations of the operating parameters (speed and route).

In this perspective, among all the different information that can be obtained from the system as a general rule, the following 5 quantities deemed the most significant ones are preferably selected:

**[0246]** - total vertical bending moment at the centre line, calm sea + wave + 'whipping', in sagging condition;

**[0247]** - total vertical bending moment at the centre line, calm sea + wave + 'whipping', in hogging condition;

**[0248]** - total vertical shear at % of the ship length at the bow, calm sea + wave + 'whipping';

**[0249]** - vertical acceleration at N of the ship length on the upper deck;

**[0250]** - cross acceleration at ¾ of the ship length on the upper deck.

The bending moment at the ship centre line and the vertical shear at ¾ of the ship length at the bow are the two most important quantities from the point of view of the hull beam sizing and thus of the ship structural safety.

The vertical and cross accelerations in a suitable selected reference point, on the contrary, are the two most important quantities from the point of view of the passenger's safety and comfort.

According to a second possible use thereof, the apparatus for operator guidance of a ship object of the present invention directly suggests to the ship officer a predetermined change of route/speed, based on a predetermined control logic based for example on the respect of the structural safety limits and/or comfort of the passengers.

More in detail, from an operating point of view, among all the quantities obtainable by the simulation of the ship behaviour, some particularly significant ones are selected for which limit values are for example established, which should not be exceeded to ensure a certain safety standard of the ship and/or comfort of the passengers.

Preferably, such quantities may be those specified above in the description of a first use of the apparatus.

Operatively, the apparatus automatically calculates the possible changes of route and or of speed to respect the above limits based on the sea condition.

According to a third possible use, the apparatus for operator guidance of a ship object of the present invention can directly interface with the ship control means, setting the navigation operating conditions in terms of route and/or speed, according to a predetermined control logic (and in any case changeable) by the ship control personnel based on the dynamic behaviour of the ship in response to the current or predictable sea condition.

Advantageously, the apparatus according to the invention may be used for processing the forecast of the ship behaviour based on the current weather conditions in the proximity of the ship (preferably by 'wave radar'), and the apparatus may be used for carrying out a simulation of the ship behaviour based on the sea conditions forecasted for the following hours or days (for example data obtained from the weather report), thus allowing to program the medium/ long term navigation.

Advantageously, the apparatus according to the invention is capable of providing additional information beside those relating to the 5 physical quantities specified above, such as the distribution of dynamic loads and accelerations on the entire ship length and the assessment of the passenger comfort index associated to seasickness.

Advantageously, the apparatus can acquire and process additional signals, for example accelerometric/strainmetric measures to integrate the current forecasts on the structural dynamic behaviour of the ship, or measures of torque/ revolutions/fuel flow to also predict the fuel consumption of propulsion motors.

In accordance with a preferred embodiment of the invention, the apparatus for operator guidance of a ship comprises the following elements:

**[0262]** - an onboard GPS, for measuring the ship speed and direction;

**[0263]** - an onboard radar in *'Band- X'*, to be used in 'short pulse' mode and suitable for interfacing with a *'wave radar'* system;

**[0264]** - a data processing station wherein the sea condition data processing software is installed ("wave radar"; for example WAVEX system by the company MIROS) and the software ("simulator") that implements the forecast procedure of the structural dynamic behaviour of the ship (forecast of the overall dynamic loads and motions including the 'whipping' contribution). Preferably, the two software packages are directly interfaced with each other.

The apparatus functional layout is shown in Figure 2.

The data processing station (PC work-station) is obtained on the bridge, in a position where the signal arrives from the bow radar, the signal from the onboard GPS and the 220V 50-60Hz power supply.

The station is provided with a monitor so as to allow displaying the data processed and their interactive presentation to the ship's officers (in Figure 2, such function is indicated with GUI (an acronym of Graphic User Interface).

For a correct operation of the wave radar it is preferable to use a radar in Band-X which should be able to operate in 'short pulse' mode for about 15 continuative minutes to ensure a good quality reproduction of the sea condition. The radar should be positioned so as to cover an angular sector of about 180° at a certain distance from the ship, but excluding the abaft zone where the wake caused by the ship movement and by the propulsors is concentrated.

In general, these operating conditions may pose strict restrictions on the possible use of a navigation radar, which must operate in *'long pulse'* mode.

Advantageously, the apparatus of the invention may thus be provided with a dedicated radar.

According to an alternative solution, the apparatus according to the invention may use an auxiliary navigation radar, located in the ship bow end, which is used only during the navigation in restricted waters or in zones with a risk of icebergs. This type of radar would thus be available for the sea condition acquisition.

Figure 1 shows a possible installation lay-out of the apparatus for operator guidance of a ship according to an embodiment.

The "wave radar" system can receive in input both the GPS signal and the signal of a gyrocompass.

The GPS signal travelling on serial RS-422 must contain the following strings in format NMEA: VTG, ZDA and GLL; the signal from the gyrocompass, also travelling on serial RS-422, must contain the following string in format NMEA: HDT.

Preferably, to prevent difficulties in the connection with the gyrocompass that is not strictly necessary for proper system operation, only the GPS signal is used.

The hardware layout of the apparatus according to the embodiment described above is illustrated in figure 3.

More in detail, the radar antenna is preferably positioned in the bow zone of the ship, so as to receive the information of the sea condition within an angle of about 180°.

The "wave radar" system provides information on the sea condition at intervals selectable up to a minimum value. The information is preferably displayed on a PC screen located on the bridge or in a space adjacent thereto.

Preferably, as regards the sea condition, the Wave radar system provides the following information: - significant wave height; - maximum wave height; - zero-up crossing period; - primary wave peak period; primary wave length; - primary wave speed; - primary wave peak direction; - total energy peak direction.

As already mentioned above, the forecast procedure of the structural dynamic behaviour of the ship allows determining the most probable maximum values of significant quantities for the structural safety or the onboard comfort of a ship even with hull and topside shape so the hydro-elasticity phenomena become important.

This is obtained overlapping the "whipping" phenomena to the "wave" ones and comparing the selected quantities (e.g. bending moment and ship shear, accelerations etc.) with the admissible limit values in relation to the structural capacity and the acceptable comfort values.

Based on the features of the ship whereon the monitoring is being carried out (hull shapes, weight distribution, inertia data of the ship beam sections), suitable hydro-dynamic and structural calculations are carried out determining in a parametric way for a series of ship speeds and angles and for a series of wave periods, to cover the most probable values of the most critical sea conditions (e.g. North Atlantic), the values of the selected quantities (to be defined each time based on the criticality of the ship in question: e.g. vertical and cross accelerations of the living areas closer to the bow, bending moment at the ship centre line, ship shear at 0.75 L from the perpendicular AD) as most probable maximum values in relation to the predictable duration of the sea condition encountered.

Suitable polar diagrams are derived from such parametric calculations wherefrom it is possible to interpolate for any intermediate value of the concerned variables.

The attached figure 5 shows an example of a polar diagram relating to the bending moment of the wave at the ship centre line, having the wave height, the wave period and the predictable duration of the sea condition (as regards the sea condition, and curves for different ship speeds and the bending moment in calm water at the centre line of the ship as parameters.

The attached figure 6 shows an example of a polar diagram relating to the vertical accelerations at 0.75 L, having the wave height, the wave period, the predictable duration of the sea condition (as regards the sea condition, and curves for different ship speeds as parameters.

The most probable values of the selected significant quantities are determined with such interpolations for a given incidence angle of the waves, a given period thereof and a given speed of the ship, entering:

**[0286]** - the wave significant height;

**[0287]** - the predictable duration of the sea condition;

**[0288]** - the real values of the stress characteristics in calm sea where the navigation takes place based on they ship loading (e.g. bending moment at the ship centre line and shear at 0.75 L)

**[0289]** - the limit values relating to comfort as per international standards and structural safety according to the provisions of the Classification Authorities.

Preferably, the apparatus provides for the automatic exchange of information between the Wave Radar and the software that manages the above polar diagrams, as regards the significant wave height and its period, the maximum energy direction of the sea spectrum, using the data from the GPS system of the ship in an automatic manner as regards the ship direction and speed. The manual input on the other hand is provided for the bending moment and shear values in calm sea read by the load management system onboard.

As will be described in detail hereinafter, the values of the input and output parameters are displayed on a screen highlighting by the polar diagrams the criticality between the selected quantities and their admissible limits. From such diagrams one can see how to change speed and route angle to return within the admissible values.

Advantageously it is also possible to input different shear and moment values in calm sea from modified loads highlighting how to return the selected quantities within the limits acting on such parameters.

Advantageously, it is possible to use the part relating to the forecast of values of the selected significant quantities independently of the Wave Radar and the GPS data, manually entering the data relating to weather-sea forecasts and to particular requirements of route and speed, in relation for example to an optimum management of fuel consumptions.

Advantageously, the apparatus allows making forecasts on the ship safety and comfort and recording to facts in terms of data of the sea condition determined and of the attempts and choices made to return the quantities to be monitored within the admissible values (black box).

Ad already said, the apparatus may be used in a "massive" mode so as to leave discretionary power of making decisions to the ship personnel as regards changing the route, the speed and the loads of the ship to prevent situations of probable criticality on the ship comfort and the ship structural safety. This is in order to leave to the ship personnel a higher degree of freedom to intervene on the ship guidance parameters for a better compromise in relation to the current requirements.

However, it is possible to use the apparatus according to an "active" mode. In this case, the apparatus automatically acts on the ship guidance parameters changing them in relation to a criterion set by the ship personnel.

The procedure of calculation according to a preferred embodiment of the invention shall now be described in greater detail.

The software installed onboard of the ship does not execute direct calculations of the dynamic behaviour of the ship, a solution not very robust and expensive from the computational point of view, but it simply interpolates the pre-calculated results at the current sea/operating conditions.

According to alternative embodiments, however, the software can also execute direct calculations of the dynamic behaviour of the ship.

According to the preferred solution described, the procedure uses a series of calculation tables defined using suitable software instruments.

Preferably but not necessarily, the calculation tables are made based on the following conditions:

- 13 encounter angles between 0° sea at bow and 180° sea at stern every 15°;
- 6 ship speed between 0 and 25 knots every 5 knots;
- 8 sea periods between 6 and 22 seconds every 2 seconds.

As already mentioned, the preparation of these results requires an accurate knowledge of:

**[0303]** - ship geometry;

**[0304]** - load conditions; and

**[0305]** - its structural features.

**[0306]** Peculiar of the present invention is the following processing:

**[0307]** - determination of the impact forces on the ship bow zone;

**[0308]** - determination of the contribution to shear and moment due to the impact forces;

**[0309]** - combination of the wave contribution and impact contribution or 'whipping'.

The correct combination of the wave and 'whipping' contributions is fundamental for a reliable forecast of the shear/moment resulting on the ship.

The functional layout of the calculation model implemented in the software is illustrated in the block diagram shown in Fig 4.

The block "*Ship Data*" refers to the data relating to the ship that must be entered to execute all the operations required by the calculation system; in particular, the hull geometry and the ship structure must be known in detail.

All the quantities directly related directly to the wave are calculated using a suitable calculation code, indicated with the generic term of "Seakeeping model". Preferably it is possible to use the calculation code widespread on the market and called PRECAL.

The role of the above "*Seakeeping model*" is to provide the mechanical response of the ship to the wavy sea in term of the so-called transfer functions or response operators (RAO, *Response Amplitude Operator*), in the hypotheses of rigid body and linearity. The hypothesis of linearity, that is, of proportionality between wave excitation and ship response, allows describing the latter in terms of how much the ship response is amplified and put out of phase relative to a single regular wave.

More in detail, the hydro-dynamic model used by the PRECAL code requires schematising the wet surface of the ship by a system of quadrilateral flat panels, at the centre of each a pulsing source is placed which mathematically represents the wave noise. The resulting wave action is then supplied by the overlapping of the single actions exerted by each source.

As regards the use of the above PRECAL code in the present calculation system, in particular, the RAO of the relative vertical speed (RVV) must be determined at the ship bow zone and at the bending moment at the centre line (VBM) for different ship speeds and directions of ship-sea encounter in a wide range of regular waves.

The "*Short term analysis*" block makes the statistical forecast of the two above quantities RVV and VBM (in terms of most probable maximum value for a given sea condition, by the combination of the sea JONSWAP spectrum with the response operators: in fact, in the hypothesis of linearity, the ship response to a given sea condition is simply provided by the overlapping of its response to the single regular waves that compose said sea condition.

Figure 11 shows by way of an example a diagram relating to the statistical RVV forecast of a cruiser in a predetermined sea condition for different ship speeds and sea directions.

Preferably, since the code PRECAL calculates the bending moment at the centre line based on the linear theory (block "*WAVE VBM amidship*"), a correction factor "*SAG/HOG ratio*" is introduced, based on the suitable classification standards in order to make a distinction between sagging wave moment and hogging wave moment. In fact, the linear theory cannot differentiate the above two contributions in absolute value but only in sign: from the physical point of view, the difference between the two wave values is due to the non-linear effects associated to the water escape and return in the ship bow, which in the case of cruisers can exhibit considerable variations compared to the static floating line.

To calculate the impact forces on the bow zone and determine the whipping accordingly, a particular procedure is used, set up and validated by experimental tests.

The idea at the basis of the above procedure consists in approaching the bow end of the ship above the floating line by a wedge. Referring to the diagram in figure 4, this operation is carried out by block "*Equivalent wedge definition*". Working according to these hypotheses, it is possible to resort to the Wagner Theory which allows determining the impact forces on a wedge that enters into the water with a given data vertical speed (block "*Wagner theory*"). Based on such theory for a wedge with geometrical inclination (deadrise) β, the (non dimensional) maximum pressure coefficient is as follows:

$$C_P = \frac{\pi^2}{4 \cdot tg^2 \beta}$$

Once the coefficient Cp is known, the impact force acting on the bow end is simply calculated as:

$$F = \frac{1}{2} \cdot \rho \cdot C_p \cdot S \cdot RVV^2$$

that is, it is proportional to the surface S of the wedge and to the square of the relative vertical speed RVV between wave and ship bow.

Such impact force acts impulsively and can thus be described assigning a triangular pattern over time, wherein the typical duration can be estimated based on the analysis of experimental data.

Figure 12 shows by way of an example the pattern of the impact force defined by experimental data.

The determination of the impact forces is executed by block "*Slamming load*".

As regards the determination of whipping stresses, on the other hand, two models are used:

**[0330]** - the so-called "simplified model" (for the prediction of the vertical bending moment at the centre line only);

**[0331]** - the uneven beam model of Timoshenko for the additional prediction of the vertical shear at ¾ at the ship bow.

In particular, the block "*Whipping VBM Amidship*" calculates the whipping moment at the ship centre line using the simplified physical model, in turn represented by the block "*Simplified model*". Such model consists of two beams connected by a torsion spring that simulates the elasticity and of a torsion damper that simulates the torsion damping, as illustrated in figure 8.

This model reproduces the equipment in a mathematical manner to simulate the elasticity of the ship beam. The spring calibration allows obtaining the same frequency of the first way of vibrating of the ship.

The combination between wave moment and whipping moment (block "*Wave and whipping loads combination*"), which is the core of the calculation system, is based on the concept of equivalent wave (block "*Equivalent wave*") to determine the suitable combination coefficients (block "*Loads contemporaneousness coefficient*"). The main lines according to which the combination between the two contributions is developed are shown below.

The two blocks "*Seakeeping model*" and "*Short term analysis*" described before allow determining the most probable maximum values of the quantities involved, and in particular:

**[0336]** - maximum value MAXST RVV of the relative vertical speed RVV at the ship bow end;

**[0337]** - maximum value MAXST VBM of the wave bending moment at the centre line; and

**[0338]** - maximum value MAXST VSF of the wave shear at ¾ ship from the stern.

Such values are calculated based on the average quadratic deviation RMS of the interested quantity and on the waiting time (Te):

$$MAX_{ST} = \sqrt{2} \cdot RMS \cdot \left[ (\ln N)^{1/2} + 0.2886(\ln N)^{-1/2} \right]$$

where $N = T_e \cdot 3600/T_z$ with Tz = mean period of the considered quantity. The corresponding maximum value of the contributions of whipping to shear/wave bending moment is then calculated based on the maximum value of RVV by block "*Whipping VBM Amidship*".

Once this step of the calculation diagram is reached, the most probable maximum values of shear/bending moment respectively of wave and whipping are thus available, in the sea conditions actually encountered by the ship as measured by the wave radar or in those forecasted by weather report.

However we should note that these are two quantities unrelated to one another, meaning that nothing ensures that the two maximum values occur at the same time. This means that assuming that the maximum value of shear/total bending moment is simply given by the sum of the maximum values of the two respective wave and whipping contributions in general is too conservative and can thus lead to overestimating the expected loads.

The combination procedure implemented in the current calculation system allows obtaining a more realistic estimate of the combination of the above two contributions in the sea conditions concerned.

First, it is established that the maximum value of the total bending moment can take place only at one of the following two events:

**[0346]** - at the moment when the wave contribution is maximum (Case A);

**[0347]** - at the moment when the whipping contribution is maximum (Case B).

According to the cases, the determination of the resulting moment thus requires the determination of the corresponding whipping (in Case A) or wave (in Case B) contribution.

In the practice, in Case A the maximum value of the total load will be given by:

$$VMAX = WAVE_{MAX} + C_{WHIP} \cdot WHIP_{MAX}$$

whereas in Case B the maximum value of the total load will be given by:

$$VMAX = WHIP_{MAX} + C_{WAVE} \cdot WAVE_{MAX}$$

The maximum between the two combination cases is then taken.

Thus, a determination must be made of the combination coefficients $C_{WHIP}$ and $C_{WAVE}$ that respectively provide the whipping contribution to the total load in the case of maximum wave load and the wave contribution to the total load in the case of maximum whipping load.

The present calculation scheme assesses such coefficients based on the delay with which the secondary contribution adds to the primary contribution, that is, based on the time difference between the two contributions. To assess such difference, the so-called concept of equivalent wave is used which in the practice consists in tracing back the maximum statistical values of the concerned quantities for a given sea condition to the maximum physical values taken up thereby for a suitably defined regular wave. To carry out such operation, reference must be made to the response operators of the concerned quantities according to the description below.

<u>Overlapping of maximum wave moment and corresponding whipping (Case A)</u>

An equivalent wave is defined with the following features:

**[0358]** - frequency equal to the resonance of the RAO of the vertical wave bending moment ($\omega_{VBM}$);

**[0359]** - amplitude calculated as:

$$a_{WAVE} = \frac{\mathrm{MAX}_{\mathrm{ST\ VBM}}}{\mathrm{RAO}_{\mathrm{VBM}}(\omega = \omega_{VBM})}.$$

The equivalent wave therefore is the regular wave that generates vertical hogging bending moment equal to that calculated by the short term statistics. As a consequence, the relative vertical speed and the vertical shear due to the equivalent wave are calculated as follows.

$$\mathrm{RVV}_{\mathrm{VBM}} = \mathrm{RAO}_{\mathrm{RVV}}(\omega = \omega_{\mathrm{VBM}}) \cdot a_{\mathrm{WAVE}}$$

$$\mathrm{V}SF_{\mathrm{VBM}} = \mathrm{RAO}_{\mathrm{VSF}}(\omega = \omega_{\mathrm{VBM}}) \cdot a_{\mathrm{WAVE}}$$

With the determined speed value, suitably considering the difference, the slamming impact force is calculated and the temporal history of the pulse is defined, wherewith through the models described above, the whipping moment and shear stresses are calculated.

The shear is calculated in a similar manner. The whipping contribution is calculated starting from the same value of relative vertical speed, whereas the wave contribution calculation takes place starting from the value $VSF_{VBM}$, always suitably taking into account the difference with the relative vertical speed.

<u>Overlapping of maximum whipping moment and corresponding wave (Case B)</u>

An equivalent wave is defined with the following features:

**[0367]** - frequency equal to the resonance of the RAO of the relative vertical speed ($\omega RVV$);

amplitude calculated as:

$$a_{whip} = \frac{\mathrm{MAX}_{\mathrm{ST\ RVV}}}{\mathrm{RAO}_{RVV}(\omega = \omega_{RVV})}$$

The equivalent wave therefore is the regular wave that generates relative vertical speed equal to that calculated by the short term statistics.

As a consequence, the vertical bending moment and the vertical wave shear due to the equivalent wave are calculated as follows.

$$VBM_{whip} = RAO_{VBM}(\omega = \omega_{RVV}) \cdot a_{whip}$$

$$VSF_{whip} = RAO_{VSF}(\omega = \omega_{RVV}) \cdot a_{whip}$$

The impulse is applied at the time of maximum relative speed. The wave contribution to the bending moment is calculated with the value of vertical wave bending moment determined, suitably considering the difference.

The shear is calculated in a similar manner. The whipping contribution is calculated starting from the same value of relative vertical speed, whereas the wave contribution calculation takes place starting from the value $VSF_{VSF}$, always suitably taking into account the difference with the relative vertical speed.

To calculate the resulting effective moment in a given sea condition, the procedure is as follows.

The vertical bending moment and the total vertical shear are divided (in both cases A and B) into the relative wave and whipping contributions.

In particular, the overlapping takes place:

**[0378]** - combining the maximum wave and whipping contributions (relative to a unit wave height) by suitable coefficients calculated on the basis of considerations related to the differences between relative vertical speed and wave stresses (consistent with the sign conventions used by the PRECAL) ;

**[0379]** - suitably deducting the values obtained relative to the reference wave height (Hs).

In this meaning it is necessary to calculate some characteristic quantities from the theoretical models used to predict the whipping stresses, and in particular:

**[0381]** - the vertical whipping bending moment calculated for unit relative vertical speed ($M_{whip}^{1-1}$) ;

**[0382]** - the vertical whipping shear calculated for unit relative vertical speed ($VSF_{whip}^{1-1}$) ;

**[0383]** - the delay between the moment of maximum relative vertical speed and the moment of maximum whipping moment ($t_{LAG\ VBM}$);

**[0384]** - the delay between the moment of maximum relative vertical speed and the moment of maximum whipping shear ($t_{LAG\ VSF}$).

According to a preferred embodiment of the invention, to make the display and the presentation of the processing made by the apparatus to the ship officer as satisfactory as possible, a graphical interface is provided which allows not just displaying the results of the processing but also the interactive control of the same.

More in detail, the interface will have two main windows: one will giver access directly to the graphic interface of the wave radar system, the other to the graphical interface of the system for forecasting the dynamic ship behaviour.

Among the various information displayed by the Wave radar system, the most important ones from the forecasting point of view are two: the wave height in metres ('Significant Wave Height') and the wave period in seconds ('Primary Wave Peak Period').

Figure 7 shows an example of the graphical interface of the system for forecasting the dynamic ship behaviour.

In determining the shear and the bending moment it is necessary to refer to the current load condition of the sea, which may be either 'sagging' or 'hogging', an information that the ship officer can easily retrieve from the onboard system and manually enter to the forecasting system.

The shear and bending moment results are presented as maximum expected values after a certain time of exposure to the current sea conditions, exposure time that can be changed by the commander but in any case it should not be more than the typical duration of a sea condition (less than 6 hours). Such values are compared with the maximum admissible values prescribed by the classification company and adopted by the designer.

The results of the vertical/cross accelerations on the other hand, are presented as so-called rms values, that is, average quadratic deviation, independent of the exposure time. Such values have importance more from a statistical point of view than from a physical point of view, in any case they were chosen since the passenger comfort criteria used at an international level are expressed in these terms.

The User can thus choose the quantity to be displayed and he/she has an immediate view of the criticality of the situation comparing the current values forecasted by the system based on the current operating/sea conditions with the limits highlighted in red.

The system does not just display the punctual situation corresponding to the current ship route, but it already displays the forecast of the values that the selected quantity would take for all the different route angles so as to facilitate the choice of a different route angle.

The system user can easily simulate the effect of a different ship speed or a different route angle decreasing/ increasing with discrete steps the route/speed values compared to the current values.

Figure 9 shows in the graphical interface, the effect of a speed reduction of 5 knots compared to the situation displayed in the example of Figure 7.

Figure 10 shows in the graphical interface, the effect of a subsequent route variation by 5° compared to the situation displayed in the example of Figure 9.

## Claims

1. Device for operator guidance of a ship, comprising:

   - means for providing an indication of the sea wave motion;
   - means, operatively connected to said means for providing an indication of the sea wave motion, for determining the rigid body ship motions due to direct wave excitation;
   - first means, operatively connected to said means for determining the rigid body ship motions, for determining and providing structural loading of the ship due to direct wave excitation;
   - means for determining and providing an indication of wave impacts on the ship;
   - second means, operatively connected to said means for determining and providing an indication of wave impacts on the ship, for determining and providing structural loading of the ship due to the whipping effect caused by wave slamming impact which causes the ship's structure to vibrate;
   - said second means comprising finite element 3D models, validated experimentally during the ship manufacturing, so that the discretization allows suitably reproducing the dynamic behaviour of the structure, from an overall point of view;
   - means operatively connected to said first and second means, for determining and providing the combination of the said first and second structural loading determinations,
   - means, operatively connected to said means for determining and providing the combination, for graphical and/or numerical display.

2. Device according to claim 1, wherein said means for providing an indication of the sea wave motion comprise means for providing:

   - wave height; and/or
   - wave period; and/or
   - wave direction
   and/or wherein said means for providing an indication of the sea wave motion comprise means for providing:
   - motion given by swell components and
   - motion given by wind generated sea components.

3. Device according to any one of the previous claims, wherein said means for providing an indication of the sea wave motion comprise a wave radar at least for determining the sea height and period at the ship, preferably but not necessarily operatively connected to an X-Band Radar.

4. Device according to any one of the previous claims, wherein said means for providing an indication of the sea wave motion comprise archives (databases) of predetermined directional sea spectra and/or wherein said means for providing an indication of the sea wave motion comprise means of comparison between the data provided by a wave radar and predetermined and archived directional sea spectra.

5. Device according to any one of the previous claims, wherein said means for determining the rigid body ship motions determine and provide kinematic quantities, such as speed and acceleration, for example in three orthogonal directions, of predetermined points of the ship.

6. Device according to any one of the previous claims, wherein said first means for determining and providing structural loading of the ship determine and provide hull loading, such as vertical bending moment (VBM) and vertical shearing force (VSF) in predetermined points of the ship, for example of the hull, for example in the centre line and at ¾ of the ship length (L) and/or

wherein said first means for determining and providing structural loading of the ship determine and provide hull loading, such as vertical bending moment (VBM) and vertical shearing force in predetermined points of the ship in sagging condition and in hogging condition.

7. Device according to any one of the previous claims, wherein said first means for determining and providing structural loading of the ship comprise an archive (database) of the hull loading, such as vertical bending moment (VBM) and vertical shearing force (VSF) in predetermined points of the ship, determined in predetermined sea directional spectra.

8. Device according to any one of the previous claims, wherein said first means for determining and providing structural loading of the ship comprise means for selecting predetermined stress conditions of the hull based on selected detected or predetermined directional sea spectra and/or wherein said first means for determining and providing structural loading of the ship comprise an archive (database) of the hull loading determined considering the non linear behaviour of the ship structure, such as the partial and variable surfacing of the hull from the sea due to the wave motion.

9. Device according to any one of the previous claims, wherein said means for determining and providing an indication of wave impacts on the ship comprise means for determining the impact pressure of a wedge that penetrates at predetermined speed in an undisturbed sea surface.

10. Device according to any one of the previous claims, wherein said means for determining and providing an indication of wave impacts on the ship comprise means for determining the impact based on the hull geometry and its vertical relative speed relative to the impact surface.

11. Device according to any one of the previous claims, wherein said second means for determining and providing structural loading (whipping) of the ship comprise means for determining the effect of the ship hull impact on the own vibrations of the ship structure, determining a structural loading that adds to the structural loading due to direct wave excitation.

12. Device according to any one of the previous claims, wherein said second means for determining and providing structural loading (whipping) of the ship comprise an archive (database) of the predetermined structural loading for a unit impact to be deducted based on the extent of the impact provided by said means for determining and providing indications of wave impacts on the ship.

13. Device according to any one of the previous claims, wherein said second means for determining and providing structural whipping loading of the ship determine and provide hull loading, such as vertical bending moment (VBM) and vertical shearing force (VSF) in predetermined points of the ship, for example of the hull, for example in the centre line and at ¾ of the ship length (L).

14. Device according to any one of the previous claims, wherein said second means for determining and providing structural whipping loading of the ship determine and provide kinematic quantities, such as speed and acceleration, for example in three orthogonal directions, of predetermined points of the ship due to whipping motions.

15. Device according to any one of the previous claims, wherein said means for determining and providing the combination of the loadings comprise means for the vectorial combination of the quantities assessed (kinematic, dynamic and vibrational).

16. Device according to any one of the previous claims, wherein said means for determining and providing the combination of the structural loadings comprise said first means for determining the contemporaneity of the effects of direct wave excitation and said second means for determining the whipping effects caused by wave slamming impact.

17. Method for operator guidance of a ship, comprising the steps of:

  - providing an indication of the sea wave motion;
  - determining the rigid body ship motions due to direct wave excitation based on the indication of the sea wave motion;
  - making a first determination of the structural loading of the ship due to direct wave excitation, said first determination being made on the basis of said determined rigid body ship motions;
- determining and providing the indication of wave impacts on the ship;
- making a second determination of the structural loading of the ship due to the whipping effect caused by wave slamming impact which causes the ship's structure to vibrate, said second determination being based on said indication of wave impacts on the ship;
said second determination comprising the step of providing finite element 3D models, validated experimentally during the ship manufacturing, so that the discretization allows suitably reproducing the dynamic behaviour of the structure from an overall point of view;
- determining and providing the combination of the said first and second structural loading determinations;
- graphically and/or numerically displaying the combination of said first and second structural loading determinations.

18. Method according to claim 17, wherein the step of indication of the sea wave motion comprises the steps of providing:

   - wave height; and/or
   - wave period; and/or
   - wave direction
   and/or wherein the step of indication of the sea wave motion comprises the further step of providing:
   - the information of the motion given by swell components and
   - the information of the motion given by wind generated sea components.

19. Method according to any one of the previous method claims, wherein said step of providing an indication of the sea wave motion comprises a wave radar calculation procedure at least for measuring the sea height and period in the vicinity of the ship, preferably but not necessarily by a radar operating at short pulse, for example with emissions in the frequency range between 7 and 12.5 MHz for about 15 continuative minutes in order to ensure a good quality reproduction of the sea condition and/or wherein said step for providing an indication of the sea wave motion comprises a GPS detection, at least for measuring the ship speed and direction.

20. Method according to any one of the previous method claims, wherein said step of providing an indication of the sea wave motion comprises means for defining such wave motion from weather-sea forecasts and/or wherein said step of providing an indication of the sea wave motion comprises archiving in a database of predetermined directional sea spectra and/or wherein said step of providing an indication of the sea wave motion comprises the comparison between the data of directional sea spectra provided by a wave radar method and predetermined and archived directional sea spectra.

21. Method according to any one of the previous method claims, wherein said first step of determining and providing structural loading of the ship due to direct wave excitation comprises the step of selecting predetermined structural loading of the hull.

22. Method according to any one of the previous method claims, wherein said first step of determining and providing structural loading of the ship due to direct wave excitation comprises a step of archiving in a database the hull structural loading determined considering the non linear behaviour of the ship structure, such as the partial and variable surfacing of the hull from the sea due to the wave motion.

23. Method according to any one of the previous method claims, wherein said step of determining and providing an indication of wave impacts on the ship comprises the step of determining the impact pressure of a wedge that penetrates at predetermined speed in an undisturbed sea surface, according to the following wedge formula with:

   inclination angle relative to the horizontal equal to β, where the maximum pressure coefficient is as follows:

$$C_P = \frac{\pi^2}{4 \cdot tg^2 \beta}$$

   with 'tg' is the 'tangent' function and the coefficient Cp is defined as:

$$C_p = \frac{F_{imp}}{\frac{1}{2}\rho \cdot S \cdot RVV^2}$$

wherein:

- Fimp is the impact force acting on the ship bow end (compared to a prism having constant section)
- S is the area of the zone impinged by the impact
- RVV is the vertical relative speed between ship and wave
- p is the water density.

24. Method according to any one of the previous method claims, wherein said step of determining and providing structural whipping loading of the ship comprises archiving in database predetermined structural loadings for a unit impact of the wave to be deducted based on the extent of the impact provided by the step of determining and providing indications of wave impacts on the ship.

25. Device for operator guidance of a ship, according to any one of claims 1 to 16, further comprising

- means for measuring and providing a signal indicative of the ship speed;
- means for measuring and providing a signal indicative of the ship direction or advance route;
- means for measuring and providing a signal indicative of the sea directional spectra;
- means, based on the sea directional spectra and on the direction and on speed of said ship, for determining and providing:

  - the structural loading due to direct wave excitation
  - the structural loading due to whipping effects caused by wave slamming impact
  - the combination of the above mentioned two components taking into account the comtemporaneity of the said effects
  - means for the graphical and/or numerical display of the simulation processed to provide an operator guidance.

**Patentansprüche**

1. Vorrichtung zur Bedieneranweisung eines Schiffes, enthaltend:

- Einrichtungen zum Bereitstellen eines Hinweises auf den Wellengang;
- Einrichtungen, die wirkungsmäßig mit den Einrichtungen zum Bereitstellen eines Hinweises auf den Wellengang verbunden sind, um die Starrkörper-Schiffsbewegungen infolge direkter Wellenanregung zu bestimmen;
- erste Einrichtungen, die mit den Einrichtungen zum Bestimmen der Starrkörper-Schiffsbewegung wirkungsmäßig verbunden sind, um die strukturelle Belastung des Schiffes infolge der direkten Wellenanregung zu bestimmen und bereitzustellen;
- Einrichtungen zum Bestimmen und Bereitstellen eines Hinweises auf die Wellenaufschläge auf das Schiff;
- zweite Einrichtungen, die wirkungsmäßig mit den Einrichtungen zum Bestimmen und Bereitstellen eines Hinweises auf die Wellenaufschläge auf das Schiff verbunden sind, um die strukturelle Belastung des Schiffes infolge des Peitscheneffektes zu bestimmen und bereitzustellen, der durch den Aufschlag auftreffender Wellen verursacht wird und eine Vibration der Schiffsstruktur bewirkt;
- wobei die zweiten Einrichtungen Finite-Element-3D-Modelle enthalten, die während der Fertigung des Schiffes experimentell validiert werden, so dass die Diskretisierung ein geeignetes Reproduzieren des dynamischen Verhaltens der Struktur insgesamt gestattet;
- Einrichtungen, die mit den ersten und den zweiten Einrichtungen zum Bestimmen und Bereitstellen der Kombination der ersten und der zweiten Bestimmungen der strukturellen Belastung wirkungsmäßig verbunden sind,
- Einrichtungen, die mit den Einrichtungen zum Bestimmen und Bereitstellen der Kombination zur graphischen und/oder numerischen Anzeige wirkungsmäßig verbunden sind.

2. Vorrichtung nach Anspruch 1, bei der die Einrichtungen zum Bereitstellen eines Hinweises auf den Wellengang Einrichtungen enthalten, die bereitstellen:

- eine Wellenhöhe und/oder
- eine Wellenperiode und/oder
- eine Wellenrichtung

und/oder die Einrichtungen zum Bereitstellen eines Hinweises auf den Wellengang Einrichtungen enthalten, die bereitstellen:

- eine Bewegung, die durch Anteile der Dünung gegeben ist, und
- eine Bewegung die durch Anteile der durch den Wind aufgewühlten See gegeben ist.

3. Vorrichtung nach einem der vorhergehenden Ansprüche, bei der die Einrichtungen zum Bereitstellen eines Hinweises auf den Wellengang ein Wellenradar wenigstens zum Bestimmen der Wellenhöhe und -periode an dem Schiff enthalten, die vorzugsweise jedoch nicht notwendigerweise mit einem X-Band-Radar verbunden sind.

4. Vorrichtung nach einem der vorhergehenden Ansprüche, bei der die Einrichtungen zum Bereitstellen eines Hinweises auf den Wellengang Archive (Datenbanken) vorbestimmter, richtungsabhängiger Wellenspektren enthalten und/oder die Einrichtungen zum Bereitstellen eines Hinweises auf den Wellengang Einrichtungen zum Vergleichen zwischen den Daten, die durch das Wellenradar bereitgestellt werden, und archivierter, richtungsabhängiger Wellenspektren enthalten.

5. Vorrichtung nach einem der vorhergehenden Ansprüche, bei der die Einrichtungen zum Bestimmen der Starrkörper-Schiffsbewegungen kinematische Größen, wie etwa Geschwindigkeit und Beschleunigung, beispielsweise in drei orthogonalen Richtungen vorbestimmter Punkte des Schiffes bestimmen und bereitstellen.

6. Vorrichtung nach einem der vorhergehenden Ansprüche, bei der die ersten Einrichtungen zum Bestimmen und Bereitstellen struktureller Belastungen des Schiffes eine Rumpfbelastung, wie etwa ein vertikales Biegemoment (VBM) und einer vertikale Scherkraft (VSF), an vorbestimmten Punkten des Schiffes, wie etwa des Rumpfes, beispielsweise auf der Mittellinie und bei 3/4 der Schiffslänge (L) bestimmen und bereitstellen und/oder die ersten Einrichtungen zum Bestimmen und Bereitstellen struktureller Belastungen des Schiffes Rumpfbelastungen, wie etwa ein vertikales Biegemoment (VBM) und eine vertikale Scherkraft an vorbestimmten Punkten des Schiffes in hängenden und stützenden Zuständen bestimmen und bereitstellen.

7. Vorrichtung nach einem der vorhergehenden Ansprüchen, bei der die ersten Einrichtungen zum Bestimmen und Bereitstellen struktureller Belastungen des Schiffes ein Archiv (Datenbank) der Rumpfbelastung, wie etwa des vertikalen Biegemomentes (VBM) und der vertikalen Scherkraft (VSF) an vorbestimmten Punkten des Schiffes, enthalten, die in vorbestimmten Wellenrichtungsspektren bestimmt werden.

8. Vorrichtung nach einem der vorhergehenden Ansprüche, bei der die ersten Einrichtungen zum Bestimmen und Bereitstellen struktureller Belastungen des Schiffes Einrichtungen zum Wählen vorbestimmter Biegezustände des Rumpfes auf der Basis gewählter, erfasster oder vorbestimmter Wellenrichtungsspektren enthalten und/oder die ersten Einrichtungen zum Bestimmen und Bereitstellen struktureller Belastungen des Schiffes ein Archiv (Datenbank) der Rumpfbelastungen enthalten, die unter Berücksichtigung des nicht linearen Verhaltens der Schiffsstruktur, wie etwa des partiellen und veränderbaren Oberflächenverhaltens des Rumpfes gegenüber der See infolge des Seegangs, bestimmt werden.

9. Vorrichtung nach einem der vorhergehenden Ansprüche, bei der die Einrichtungen zum Bestimmen und Bereitstellen eines Hinweises auf Wellenaufschläge auf das Schiff Einrichtungen zum Bestimmen des Aufschlagdruckes eines Keiles enthalten, der mit einer vorbestimmten Geschwindigkeit in eine glatte Wasseroberfläche einschlägt.

10. Vorrichtung nach einem der vorhergehenden Ansprüche, bei der die Einrichtungen zum Bestimmen und Bereitstellen eines Hinweises auf einen Wellenaufschlag auf das Schiff Einrichtungen zum Bestimmen des Aufschlages auf der Basis der Rumpfgeometrie und ihrer Vertikalen im Bezug auf die Geschwindigkeit im Verhältnis zur Aufschlagsfläche enthalten.

11. Vorrichtung nach einem der vorhergehenden Ansprüche, bei der die zweiten Einrichtungen zum Bestimmen und Bereitstellen einer strukturellen Belastung (Peitschen) des Schiffes Einrichtungen zum Bestimmen der Auswirkung des Schiffsrumpfaufschlages auf die Eigenvibrationen der Schiffsstruktur enthalten, die eine strukturelle Belastung bestimmen, die zu der strukturellen Belastung infolge der direkten Wellenanregung beiträgt.

EP 2 167 916 B1

**12.** Vorrichtung nach einem der vorhergehenden Ansprüche, bei der die zweiten Einrichtungen zum Bestimmen und Bereitstellen der strukturellen Belastung (Peitschen) des Schiffes ein Archiv (Datenbank) der vorbestimmten strukturellen Belastung für einen Einheitsaufschlag enthalten, der auf der Basis des Ausmaßes des Aufschlages abzuleiten ist, der durch die Einrichtungen zum Bestimmen und Bereitstellen von Hinweisen auf Wellenaufschläge auf das Schiff bereitgestellt wird.

**13.** Vorrichtung nach einem der vorhergehenden Ansprüche, bei der die zweiten Einrichtungen zum Bestimmen und Bereitstellen einer strukturellen Peitschbelastung des Schiffes eine Rumpfbelastung, wie etwa ein vertikales Biegemoment (VBM) und eine vertikale Scherkraft (VSF) an vorbestimmten Punkten des Schiffes, wie etwa des Rumpfes, beispielsweise auf der Mittellinie und bei 3/4 der Schiffslänge (L) bestimmen und bereitstellen.

**14.** Vorrichtung nach einem der vorhergehenden Ansprüche, bei der die zweiten Einrichtungen zum Bestimmen und Bereitstellen einer strukturellen Peitschbelastung des Schiffes kinematische Größen, wie etwa Geschwindigkeit und Beschleunigung beispielsweise in drei orthogonalen Richtungen vorbestimmter Punkte des Schiffes infolge von Peitschbewegungen bestimmen und bereitstellen.

**15.** Vorrichtung nach einem der vorhergehenden Ansprüche, bei der die Einrichtungen zum Bestimmen und Bereitstellen der Kombination der Belastungen Einrichtungen für die vektorielle Kombination der festgestellten Größen (kinematisch, dynamisch und schwingend) enthalten.

**16.** Vorrichtung nach einem der vorhergehenden Ansprüche, bei der die Einrichtungen zum Bestimmen und Bereitstellen der Kombination der strukturellen Belastung die ersten Einrichtungen zum Bestimmen der Gleichzeitigkeit der Auswirkungen der direkten Wellenanregung und die zweiten Einrichtungen zum Bestimmen der Peitscheneffekte enthalten, die durch den Aufschlag auftreffender Wellen verursacht werden.

**17.** Verfahren zur Bedieneranweisung eines Schiffes, umfassend folgende Schritte:

- Bereitstellen eines Hinweises auf den Wellengang;
- Bestimmen der Starrkörper-Schiffsbewegungen infolge direkter Wellenanregung auf der Basis des Hinweises auf den Wellengang;
- Ausführen einer ersten Bestimmung der strukturellen Belastung des Schiffes infolge der direkten Wellenanregung, wobei diese erste Bestimmung auf der Basis der bestimmten Starrkörper-Schiffsbewegungen erfolgt;
- Bestimmen und Bereitstellen eines Hinweises auf die Wellenaufschläge auf das Schiff;
- Ausführen einer zweiten Bestimmung der strukturellen Belastung des Schiffes infolge des Peitscheneffektes, der durch den Aufschlag auftreffender Wellen verursacht wird und eine Vibration der Schiffsstruktur bewirkt, wobei diese zweite Bestimmung auf dem Hinweis auf Wellenaufschläge auf das Schiff basiert;
wobei die zweite Bestimmung den Schritt des Bereitstellens von Finite-Element-3D-Modelle enthält, die während der Fertigung des Schiffes experimentell validiert werden, so dass die Diskretisierung ein geeignetes Reproduzieren des dynamischen Verhaltens der Struktur insgesamt gestattet;
- Bestimmen und Bereitstellen der Kombination der ersten und der zweiten Bestimmungen der strukturellen Belastung;
- graphisches und/oder numerisches Anzeigen der Kombination aus erster und zweiter Bestimmung der strukturellen Belastung.

**18.** Verfahren nach Anspruch 17, bei dem der Schritt der Hinweisgebung auf den Wellengang die Schritte umfasst, die bereitstellen:

- eine Wellenhöhe und/oder
- eine Wellenperiode und/oder
- eine Wellenrichtung
und/oder der Schritt der Hinweisgebung auf den Wellengang weiterhin den Schritt des Bereitstellens:
- der Informationen über die Bewegung, die durch Anteile der Dünung gegeben ist, und
- der Informationen über die Bewegung umfasst, die durch Anteile der durch den Wind aufgewühlten See gegeben ist.

**19.** Verfahren nach einem der vorhergehenden Verfahrensansprüche, bei dem der Schritt zum Bereitstellen eines Hinweises auf den Wellengang einen Wellenradar-Berechnungsvorgang wenigstens zum Messen der Wellenhöhe und -periode in der Nähe des Schiffes vorzugsweise jedoch nicht notwendigerweise mit einem Radar umfasst, das

25

mit kurzen Impulsen beispielsweise mit Emissionen im Frequenzbereich zwischen 7 und 12,5 MHz für etwa 15 aufeinander folgende Minuten arbeitet, um eine qualitativ gute Wiedergabe des Zustandes des Meeres sicherzustellen, und/oder der Schritt des Bereitstellens eines Hinweises auf den Seegang eine GPS-Erfassung wenigstens für die Messung der Geschwindigkeit und Richtung des Schiffes umfasst.

20. Verfahren nach einem der vorhergehenden Verfahrensansprüche, bei dem der Schritt zum Bereitstellen eines Hinweises auf den Wellengang Einrichtungen zum Definieren eines derartigen Wellengangs aus Seewettervorhersagen enthält und/oder der Schritt zum Bereitstellen eines Hinweises auf den Wellengang das Archivieren von vorbestimmten, richtungsabhängigen Wellenspektren in einer Datenbank umfasst und/oder der Schritt des Bereitstellens eines Hinweises auf den Wellengang den Vergleich zwischen den Daten der richtungsabhängigen Wellenspektren, die von dem Wellenradarverfahren bereitgestellt werden, und vorbestimmten sowie archivierten, richtungsabhängigen Wellenspektren umfasst.

21. Verfahren nach einem der vorhergehenden Verfahrensansprüchen, bei dem der erste Schritt des Bestimmens und Bereitstellens einer strukturellen Belastung des Schiffes infolge einer direkten Wellenanregung den Schritt des Wählens einer vorbestimmten strukturellen Belastung des Rumpfes umfasst.

22. Verfahren nach einem der vorhergehenden Verfahrensansprüche, bei dem der erste Schritt des Bestimmens und Bereitstellens einer strukturellen Belastung infolge der direkten Wellenanregung den Schritt des Archivierens der strukturellen Belastung des Rumpfes, die unter Berücksichtigung des nicht linearen Verhaltens der Schiffstruktur, wie etwa des partiellen und variablen Oberflächeverhaltens des Rumpfes gegenüber der See infolge des Wellengangs bestimmt wurde, in einer Datenbank umfasst.

23. Verfahren nach einem der vorhergehenden Verfahrensansprüche, bei dem der Schritt des Bestimmens und Bereitstellens eines Hinweises auf Wellenaufschläge auf das Schiff den Schritt des Bestimmens des Aufschlagdruckes eines Keiles, der mit einer vorbestimmten Geschwindigkeit in eine glatte Wasseroberfläche einschlägt, gemäß der folgenden Formel umfasst, wobei:

der Neigungswinkel im Bezug auf die Horizontale gleich β und der maximale Druckkoeffizient wie folgt lautet:

$$C_P = \frac{\pi^2}{4 \cdot tg^2 \beta}$$

wobei "tg" die "Tangenten"-Funktion und der Koeffizient Cp wie folgt definiert ist:

$$C_P = \frac{F_{imp}}{\frac{1}{2} \rho \cdot S \cdot RVV^2}$$

wobei:

- $F_{imp}$ die Aufschlagskraft ist, die auf das Schiffsbugende wirkt (verglichen mit einem Prisma, das einen konstanten Querschnitt hat),
- S die Fläche der Zone ist, die von dem Einschlag betroffen ist,
- RVV die vertikale Relativgeschwindigkeit zwischen dem Schiff und der Welle ist und
- ρ die Wasserdichte ist.

24. Verfahren nach einem der vorhergehenden Verfahrensansprüche, bei dem der Schritt zum Bestimmen und Breitstellen einer strukturellen Peitschbelastung des Schiffes das Archivieren vorbestimmter struktureller Belastungen für einen Einheitsaufschlag der Welle, der auf der Basis des Umfangs des Aufschlages abzuleiten ist, der durch den Schritt des Bestimmens und Bereitstellens von Hinweisen auf Wellenaufschläge auf das Schiff bereitgestellt wird, in einer Datenbank umfasst.

**25.** Vorrichtung zur Bedieneranweisung eines Schiffes nach einem der Ansprüche 1 bis 16, weiterhin enthaltend:

- Einrichtungen zum Messen und Bereitstellen eines Signals, das für die Geschwindigkeit des Schiffes kennzeichnend ist;
- Einrichtungen zum Messen und Bereitstellen eines Signals, das für die Richtung oder den Kurs des Schiffes kennzeichnend ist;
- Einrichtungen zum Messen und Bereitstellen eines Signals, das für die Wellensrichtungsspektren kennzeichnend ist;
- Einrichtungen zum Bestimmen und Bereitstellen auf der Basis der Wellenrichtungsspektren sowie der Richtung und der Geschwindigkeit des Schiffes folgender Größen:

- die strukturelle Belastung infolge der direkten Wellenanregung;
- die strukturelle Belastung infolge des Peitscheneffektes, der durch den Aufschlag auftreffender Wellen verursacht wird, und
- die Kombination der beiden oben erwähnten Komponenten unter Berücksichtigung der Gleichzeitigkeit der Effekte,

- und Einrichtungen für die graphische und/oder numerische Anzeige der verarbeiteten Simulation, um eine Bedieneranweisung bereitzustellen.

## Revendications

**1.** Dispositif pour le guidage d'un opérateur d'un navire, comprenant :

- des moyens pour fournir une indication du mouvement des vagues de la mer ;
- des moyens, connectés de manière fonctionnelle auxdits moyens pour fournir une indication du mouvement des vagues de la mer, pour déterminer les mouvements d'un navire à corps rigide dus à l'excitation directe des vagues ;
- des premiers moyens, connectés de manière fonctionnelle auxdits moyens pour déterminer les mouvements d'un navire à corps rigide, pour déterminer et fournir une charge structurelle du navire due à l'excitation directe des vagues ;
- des moyens pour déterminer et fournir une indication des impacts des vagues sur le navire ;
- des deuxièmes moyens, connectés de manière fonctionnelle auxdits moyens pour déterminer et fournir une indication des impacts des vagues sur le navire, pour déterminer et fournir une charge structurelle du navire due à l'effet de fouettement provoqué par l'impact des vagues qui provoque la vibration de la structure du navire ;
- lesdits deuxièmes moyens comprenant des modèles tridimensionnels à éléments finis, validés expérimentalement pendant la fabrication du navire, de sorte que la discrétisation permette la reproduction de manière appropriée du comportement dynamique de la structure, d'un point de vue global ;
- des moyens, connectés de manière fonctionnelle auxdits premiers et deuxièmes moyens, pour déterminer et fournir la combinaison desdites première et deuxième déterminations de charge structurelle,
- des moyens, connectés de manière fonctionnelle auxdits moyens pour déterminer et fournir la combinaison, pour un affichage graphique et/ou numérique.

**2.** Dispositif selon la revendication 1, dans lequel lesdits moyens pour fournir une indication du mouvement des vagues de la mer comprennent des moyens pour fournir :

- une hauteur des vagues ; et/ou
- une période des vagues ; et/ou
- une direction des vagues
et/ou dans lequel lesdits moyens pour fournir une indication du mouvement des vagues de la mer comprennent des moyens pour fournir :
- un mouvement communiqué par les composantes de la houle, et
- un mouvement communiqué par les composantes de la mer générées par le vent.

**3.** Dispositif selon l'une quelconque des revendications précédentes, dans lequel lesdits moyens pour fournir une indication du mouvement des vagues de la mer comprennent un radar de vagues au moins pour déterminer la hauteur et la période de la mer au niveau du navire, connectés, de préférence, mais pas nécessairement, de manière fonctionnelle à un radar à bande X.

**4.** Dispositif selon l'une quelconque des revendications précédentes, dans lequel lesdits moyens pour fournir une indication du mouvement des vagues de la mer comprennent des archives (bases de données) de spectres de mer directionnels prédéterminés, et/ou dans lequel lesdits moyens pour fournir une indication du mouvement des vagues de la mer comprennent des moyens de comparaison entre les données fournies par un radar de vagues et des spectres de mer directionnels prédéterminés et archivés.

**5.** Dispositif selon l'une quelconque des revendications précédentes, dans lequel lesdits moyens pour déterminer les mouvements d'un navire à corps rigide déterminent et fournissent des quantités cinématiques, telles qu'une vitesse et une accélération, par exemple dans trois directions orthogonales, de points prédéterminés du navire.

**6.** Dispositif selon l'une quelconque des revendications précédentes, dans lequel lesdits premiers moyens pour déterminer et fournir une charge structurelle du navire déterminent et fournissent une charge de coque, telle qu'un moment de flexion vertical (VBM) et une force de cisaillement verticale (VSF) en des points prédéterminés du navire, par exemple de la coque, par exemple sur la ligne centrale et au 3/4 de la longueur (L) du navire, et/ou dans lequel lesdits premiers moyens pour déterminer et fournir une charge structurelle du navire déterminent et fournissent une charge de coque, telle qu'un moment de flexion vertical (VBM) et une force de cisaillement verticale en des points prédéterminés du navire dans une condition de fléchissement et dans une condition de fléchissement négatif.

**7.** Dispositif selon l'une quelconque des revendications précédentes, dans lequel lesdits premiers moyens pour déterminer et fournir une charge structurelle du navire comprennent une archive (base de données) de la charge de coque, telle qu'un moment de flexion vertical (VBM) et une force de cisaillement verticale (VSF) en des points prédéterminés du navire, déterminée dans des spectres de mer directionnels prédéterminés.

**8.** Dispositif selon l'une quelconque des revendications précédentes, dans lequel lesdits premiers moyens pour déterminer et fournir une charge structurelle du navire comprennent des moyens pour sélectionner des conditions de contrainte prédéterminées de la coque sur la base de spectres de mer directionnels détectés ou prédéterminés sélectionnés, et/ou dans lequel lesdits premiers moyens pour déterminer et fournir une charge structurelle du navire comprennent une archive (base de données) de la charge de coque déterminée en prenant en considération le comportement non linéaire de la structure du navire, tel que le surfaçage partiel et variable de la coque par la mer du fait du mouvement des vagues.

**9.** Dispositif selon l'une quelconque des revendications précédentes, dans lequel lesdits moyens pour déterminer et fournir une indication des impacts des vagues sur le navire comprennent des moyens pour déterminer la pression d'impact d'un coin qui pénètre à une vitesse prédéterminée dans une surface de mer non perturbée.

**10.** Dispositif selon l'une quelconque des revendications précédentes, dans lequel lesdits moyens pour déterminer et fournir une indication des impacts des vagues sur le navire comprennent des moyens pour déterminer l'impact sur la base de la géométrie de la coque et de sa vitesse relative verticale par rapport à la surface d'impact.

**11.** Dispositif selon l'une quelconque des revendications précédentes, dans lequel lesdits deuxièmes moyens pour déterminer et fournir une charge structurelle (fouettement) du navire comprennent des moyens pour déterminer l'effet de l'impact de coque de navire sur les vibrations propres de la structure du navire, déterminant une charge structurelle qui s'ajoute à la charge structurelle due à l'excitation directe des vagues.

**12.** Dispositif selon l'une quelconque des revendications précédentes, dans lequel lesdits deuxièmes moyens pour déterminer et fournir une charge structurelle (fouettement) du navire comprennent une archive (base de données) de la charge structurelle prédéterminée pour un impact unitaire à déduire sur la base de l'étendue de l'impact fournie par lesdits moyens pour déterminer et fournir des indications des impacts des vagues sur le navire.

**13.** Dispositif selon l'une quelconque des revendications précédentes, dans lequel lesdits deuxièmes moyens pour déterminer et fournir une charge structurelle de fouettement du navire déterminent et fournissent une charge de coque, telle qu'un moment de flexion vertical (VBM) et une force de cisaillement verticale (VSF) en des points prédéterminés du navire, par exemple de la coque, par exemple sur la ligne centrale et au 3/4 de la longueur (L) du navire.

**14.** Dispositif selon l'une quelconque des revendications précédentes, dans lequel lesdits deuxièmes moyens pour déterminer et fournir une charge structurelle de fouettement du navire déterminent et fournissent des quantités cinématiques, telles qu'une vitesse et une accélération, par exemple dans trois directions orthogonales, de points prédéterminés du navire du fait de mouvements de fouettement.

**15.** Dispositif selon l'une quelconque des revendications précédentes, dans lequel lesdits moyens pour déterminer et fournir la combinaison des charges comprennent des moyens pour la combinaison vectorielle des quantités estimées (cinématique, dynamique et vibratoire).

**16.** Dispositif selon l'une quelconque des revendications précédentes, dans lequel lesdits moyens pour déterminer et fournir la combinaison des charges structurelles comprennent lesdits premiers moyens pour déterminer la contemporanéité des effets de l'excitation directe des vagues et lesdits deuxièmes moyens pour déterminer les effets de fouettement provoqués par l'impact des vagues.

**17.** Procédé pour le guidage d'un opérateur d'un navire, comprenant les étapes consistant à :

- fournir une indication du mouvement des vagues de la mer ;
- déterminer les mouvements d'un navire à corps rigide dus à l'excitation directe des vagues sur la base de l'indication du mouvement des vagues de la mer ;
- effectuer une première détermination de la charge structurelle du navire due à l'excitation directe des vagues, ladite première détermination étant effectuée sur la base desdits mouvements d'un navire à corps rigide déterminés ;
- déterminer et fournir l'indication des impacts des vagues sur le navire ;
- effectuer une deuxième détermination de la charge structurelle du navire due à l'effet de fouettement provoqué par l'impact des vagues qui provoque une vibration de la structure du navire, ladite deuxième détermination étant basée sur ladite indication des impacts des vagues sur le navire ;
ladite deuxième détermination comprenant l'étape consistant à fournir des modèles tridimensionnels à éléments finis, validés expérimentalement pendant la fabrication de navire, de sorte que la discrétisation permette une reproduction appropriée du comportement dynamique de la structure d'un point de vue global ;
- déterminer et fournir la combinaison desdites première et deuxième déterminations de charge structurelle ;
- afficher graphiquement et/ou numériquement la combinaison desdites première et deuxième déterminations de charge structurelle.

**18.** Procédé selon la revendication 17, dans lequel l'étape d'indication du mouvement des vagues de la mer comprend les étapes consistant à fournir :

- une hauteur des vagues ; et/ou
- une période des vagues ; et/ou
- une direction des vagues
et/ou dans lequel l'étape d'indication du mouvement des vagues de la mer comprend l'étape supplémentaire consistant à fournir :
- les informations du mouvement communiqué par les composantes de la houle, et
- les informations du mouvement communiqué par les composantes de la mer générées par le vent.

**19.** Procédé selon l'une quelconque des revendications de procédé précédentes, dans lequel ladite étape de fourniture d'une indication du mouvement des vagues de la mer comprend une procédure de calcul de radar de vagues au moins pour mesurer la hauteur et la période de mer dans le voisinage du navire, de préférence, mais pas nécessairement, par un radar fonctionnant par courtes impulsions, par exemple avec des émissions dans la plage de fréquence entre 7 et 12,5 MHz pendant environ 15 minutes continues afin de garantir une reproduction de bonne qualité de la condition de mer, et/ou dans lequel ladite étape pour fournir une indication du mouvement des vagues de la mer comprend une détection GPS, au moins pour mesurer la vitesse et la direction du navire.

**20.** Procédé selon l'une quelconque des revendications de procédé précédentes, dans lequel ladite étape consistant à fournir une indication du mouvement des vagues de la mer comprend des moyens pour définir ce mouvement des vagues à partir de prévisions de météo marine, et/ou dans lequel ladite étape consistant à fournir une indication du mouvement des vagues de la mer comprend l'archivage dans une base de données de spectres de mer directionnels prédéterminés, et/ou dans lequel ladite étape consistant à fournir une indication du mouvement des vagues de la mer comprend la comparaison entre les données de spectres de mer directionnels fournies par un procédé à radar de vagues et des spectres de mer directionnels prédéterminés et archivés.

21. Procédé selon l'une quelconque des revendications de procédé précédentes, dans lequel ladite première étape consistant à déterminer et fournir une charge structurelle du navire due à l'excitation directe des vagues comprend l'étape consistant à sélectionner une charge structurelle prédéterminée de la coque.

22. Procédé selon l'une quelconque des revendications de procédé précédentes, dans lequel ladite première étape consistant à déterminer et fournir une charge structurelle du navire due à l'excitation directe des vagues comprend une étape d'archivage dans une base de données de la charge structurelle de la coque déterminée en prenant en considération le comportement non linéaire de la structure du navire, tel que le surfaçage partiel et variable de la coque par la mer du fait du mouvement des vagues.

23. Procédé selon l'une quelconque des revendications de procédé précédentes, dans lequel ladite étape consistant à déterminer et fournir une indication des impacts des vagues sur le navire comprend l'étape consistant à déterminer la pression d'impact d'un coin qui pénètre à une vitesse prédéterminée dans une surface de mer non perturbée, selon la formule de coin suivante avec :

un angle d'inclinaison par rapport à l'horizontale égal à $\beta$, où le coefficient de pression maximum est comme suit :

$$C_P = \frac{\pi^2}{4 \cdot tg^2 \beta}$$

'tg' étant la fonction 'tangente' et le coefficient Cp étant défini par :

$$C_\rho = \frac{F_{imp}}{\frac{1}{2}\rho \cdot S \cdot RVV^2}$$

dans laquelle :

- Fimp est la force d'impact agissant sur l'extrémité de proue du navire (comparée à un prisme de section constante)
- S est l'aire de la zone frappée par l'impact
- RVV est la vitesse relative verticale entre le navire et la vague
- p est la densité de l'eau.

24. Procédé selon l'une quelconque des revendications de procédé précédentes, dans lequel ladite étape consistant à déterminer et fournir une charge structurelle de fouettement du navire comprend l'archivage dans une base de données de charges structurelles prédéterminées pour un impact unitaire de la vague à déduire sur la base de l'étendue de l'impact fournie par l'étape consistant à déterminer et fournir des indications des impacts des vagues sur le navire.

25. Dispositif pour le guidage d'un opérateur d'un navire, selon l'une quelconque des revendications 1 à 16, comprenant en outre

- des moyens pour mesurer et fournir un signal indicatif de la vitesse du navire ;
- des moyens pour mesurer et fournir un signal indicatif de la direction ou du trajet de progression du navire ;
- des moyens pour mesurer et fournir un signal indicatif des spectres de mer directionnels ;
- des moyens pour, sur la base des spectres de mer directionnels et de la direction et de la vitesse dudit navire, déterminer et fournir :

- la charge structurelle due à l'excitation directe des vagues,
- la charge structurelle due aux effets de fouettement provoqués par l'impact des vagues,
- la combinaison des deux composantes mentionnées ci-dessus prenant en compte la contemporanéité desdits effets,
- des moyens pour l'affichage graphique et/ou numérique de la simulation traitée pour réaliser un guidage d'opérateur.

Antenna

PC
Work-station

Radar
Antenna

**Fig. 1**

**Fig. 2**

**Fig. 3**

Fig. 4

**Fig. 5**

**Fig. 6**

| Effective Values | SHIP | | WAVE | |
|---|---|---|---|---|
| MAX VBM ⏶ SAG (1) ⏷ | Speed Actual | 15 knots | Wave Height | 5.7 m |
| | | | Wave Period | 8.6 s |
| 4.0 hrs | HDN Actual | 220 °N | HDN True | 230 °N |
| ⏶ Exp.Time ⏷ | | | HDN Relative | 10 °St |
| S.w. Bending 1/2L | | 0.50 GNm | S.w. Shear 3/4L | 0.01 GN |

| Assumed Speed |
|---|
| 15 knots |
| ⏶ Change ⏷ Speed |
| Assumed HDN True |
| 220 °N |
| PS ⏴    ⏵ SB |
| Change HDN |
| Assumed HDN Rel |
| 10 °St |

**Fig. 7**

Fig. 8

Fig. 10

Fig 9

40

**Fig. 11**

**Fig. 12**

Fig. 13

EP 2 167 916 B1

Fig. 14

Fig. 15

Fig. 16

Fig. 17

Fig. 18

**RAO VBM 0.5 L - Head Sea**

Fig. 19

EP 2 167 916 B1

Fig. 20

Fig. 21

Fig. 22

Fig. 23

Fig. 24

>MAX VBM HOG *(2)*

>MAX VSF *(3)*

>RMS VER. ACC. *(4)*

>RMS LAT. ACC. *(5)*

• Discrete step
• Allowed range
  = (0, 25 knots)

FIG. 25

| EFFECTIVE VALUES | SHIP | | WAVE | |
|---|---|---|---|---|
| △ MAX VBM ▽ SAG *(1)* ⬧ Exp.Time 3.0 hrs | Speed Actual | 15 knots | Wave Height | 7.0 m |
| | | | Wave Period | 11.0 s |
| | HDN Actual | 220° N | HDN True | 230 °N |
| | | | HDN Relative | 10 °St |
| S.w. Bending 1/2L | 2.73 GNm | | S.w. Shear 3/4L | 0.028 GN |
| Assumed Speed | | | | |
| 15 knots | | | | |
| △ Change ▽ Speed | | | | |
| Assumed HDN True | | | | |
| 220 °N | | | | |
| PS ◁ | ▷ SB | | | |
| Change HDN | | | | |
| Assumed HDN Rel | | | | |
| 10 °St | | | | |

+0.5
- 0.5

+5
- 5

-5 +5

SHIP

WAVE

EP 2 167 916 B1

**EP 2 167 916 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6263297 B1